(19) Europäisches Patentamt / European Patent Office / Office européen des brevets

(11) **EP 3 745 264 B1**

(12) **EUROPEAN PATENT SPECIFICATION**

(45) Date of publication and mention
of the grant of the patent:
**28.05.2025 Bulletin 2025/22**

(21) Application number: **20165743.4**

(22) Date of filing: **26.03.2020**

(51) International Patent Classification (IPC):
**G06F 9/50** *(2006.01)* **G06N 3/04** *(2023.01)*

(52) Cooperative Patent Classification (CPC):
**G06F 9/5072; G06F 9/5083; G06F 11/3409;
G06F 11/3447; G06N 3/044; G06N 3/045;
G06N 3/08;** G06F 2201/81; G06N 3/048

(54) **AUTOMATED SCALING OF RESOURCES BASED ON LONG SHORT-TERM MEMORY RECURRENT NEURAL NETWORKS AND ATTENTION MECHANISMS**

AUTOMATISCHE SKALIERUNG VON RESSOURCEN BASIEREND AUF LANG- UND KURZFRISTIGEN REKURRENTEN NEURONALEN SPEICHERNETZWERKEN UND AUFMERKSAMKEITSMECHANISMEN

MISE À L'ÉCHELLE AUTOMATISÉE DES RESSOURCES SUR LA BASE DE RÉSEAUX NEURONAUX RÉCURRENTS DE MÉMOIRE À LONG ET COURT TERME ET DE MÉCANISMES D'ATTENTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2019 US 201916424166**

(43) Date of publication of application:
**02.12.2020 Bulletin 2020/49**

(73) Proprietor: **SAP SE**
**69190 Walldorf (DE)**

(72) Inventors:
• **VERMA, Devakar Kumar**
**69190 Walldorf (DE)**
• **JAIN, Shashank Mohan**
**69190 Walldorf (DE)**

(74) Representative: **Müller-Boré & Partner
Patentanwälte PartG mbB
Friedenheimer Brücke 21
80639 München (DE)**

(56) References cited:
CN-A- 108 874 542    US-A1- 2018 300 621
US-A1- 2018 349 168

• **WIKIPEDIA COMMUNITY: "Recurrent neural network - Wikipedia", WIKIPEDIA, 10 March 2019 (2019-03-10), XP055739428, Retrieved from the Internet <URL:https://web.archive.org/web/20190310233825/https://en.wikipedia.org/wiki/Recurrent_neural_network> [retrieved on 20201013]**
• **ASHRAF A: "Automatic Cloud Resource Scaling Algorithm based on Long Short-Term Memory Recurrent Neural Network", INTERNATIONAL JOURNAL OF ADVANCED COMPUTER SCIENCE & APPLICATIONS, 12 January 2017 (2017-01-12), XP055739104, Retrieved from the Internet <URL:https://arxiv.org/ftp/arxiv/papers/1701/1701.03295.pdf> [retrieved on 20201013], DOI: 10.14569/IJACSA.2016.071236**
• **E. G. RADHIKA ET AL: "An Efficient Predictive technique to Autoscale the Resources for Web applications in Private cloud", 2018 FOURTH INTERNATIONAL CONFERENCE ON ADVANCES IN ELECTRICAL, ELECTRONICS, INFORMATION, COMMUNICATION AND BIO-INFORMATICS (AEEICB), 4 October 2018 (2018-10-04), pages 1 - 7, XP055739105, ISBN: 978-1-5386-4606-9, DOI: 10.1109/AEEICB.2018.8480899**

EP 3 745 264 B1

- THANG LUONG ET AL: "Effective Approaches to Attention-based Neural Machine Translation", PROCEEDINGS OF THE 2015 CONFERENCE ON EMPIRICAL METHODS IN NATURAL LANGUAGE PROCESSING, 17 September 2015 (2015-09-17), Stroudsburg, PA, USA, pages 1412 - 1421, XP055435303, DOI: 10.18653/v1/D15-1166

- KARIM FAZLE ET AL: "LSTM Fully Convolutional Networks for Time Series Classification", IEEE ACCESS, vol. 6, 4 December 2017 (2017-12-04), pages 1662 - 1669, XP011677431, DOI: 10.1109/ACCESS.2017.2779939

**Description**

## BACKGROUND

Elasticity can be an important feature of cloud computing systems. With such a feature, the provisioning platform may dynamically adapt to changing workloads. In some instances, the platform scales up to add more resource. In other instances, the platform scales down to remove unused resources. A scalability feature allows users to run their applications in an elastic manner, use only computational resources they need, and pay only for what they use.

Various existing scaling techniques of cloud platform include manual approaches or are based on statically defined rules. Many auto-scaling techniques function in a reactive fashion where resource availability is modified when a threshold value has been passed. After a worst-case scenario occurs, the service provider responds to it by adjusting resource capacity. This sometimes affects the resilience and availability of applications on cloud platform. The result of which could be violation of service level agreements or losing market share. Some existing techniques may also adjust resource capacity in a pre-deterministic way. The resource availability is modified by a pre-defined constant value whenever threshold value is reached.

Document CN 108 874 542 A (UNIV GUILIN ELECTRONIC TECH, 2018-11 -23) describes an orchestration system that utilizes a neural network consisting of multiple LSTM-RNN interconnected layers for predicting resource utilization in container-based distributed system and dynamically adjusting the resource allocation based on the predicted outcome.

Document "LSTM Fully Convolutional Networks for Time Series Classification" (Fazle K. et al, 14-02-2018, IEEE Access, DOI 10.1109/ACCESS.2017.2779939) describes an adaptation of LSTM cell with attention mechanism for improving time series classification.

## SUMMARY

The invention is defined by the independent claims. Particular embodiments are defined by the subject-matter of the dependent claims. In the following, the term "embodiment" is to be understood as an unclaimed example, unless it is directed to the subject-matter of the claims.

## BRIEF DESCRIPTION OF THE DRAWINGS

FIG. 1 illustrates a system that automatedly scales resource utilization based on long short-term memory recurrent neural networks and attention mechanisms according to some embodiments.

FIG. 2 illustrates a model that includes long short-term memory recurrent neural network layers and attention mechanism layers according to some embodiments.

FIG. 3 illustrates long short-term memory cell according to some embodiments.

FIG. 4 illustrates an attention mechanism layer according to some embodiments.

FIG. 5 illustrates a process for predicting resource usage according to some embodiments.

FIG. 6 illustrates an exemplary computer system, in which various embodiments may be implemented.

FIG. 7 illustrates an exemplary computing device, in which various embodiments may be implemented.

FIG. 8 illustrates an exemplary system, in which various embodiments may be implemented.

## DETAILED DESCRIPTION

In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

Described herein are techniques for automatedly scaling of resources based on long short-term memory recurrent neural networks (LSTM-RNNs) and attention mechanisms. In some embodiments, a computing system includes one or more resource consumers that are each configured to consume resources (e.g., processors, memory, network bandwidth, etc.) provided by the computing system. The computing system may monitor the utilization of resources by the resource consumers and collect data associated with the utilization of the resources. Based on the collected data, the computing system can generate a model that includes several LSTM-RNN layers and one or more attention mechanism layers. The model may be configured to predict the utilization of resources at one or more future points in time based on the collected data. Based on the predicted utilization of resources, the computing system can automatedly scale (e.g., scale up and/or scale down) resources.

The techniques described in the present application provide a number of benefits and advantages over conventional methods for automatedly scaling of resources. First, by using a model that predicts resource utilization, the computing system is able to automatedly scale resources in a proactive manner, unlike conventional techniques that scale resources in a reactive manner. This way, the computing system can scale resources before utilization of the resources reaches critical thresholds. In addition, the computing system may be able to scale resources by a sufficient amount to meet the predicted demands for the resources (as opposed to scaling the resources by a defined amount and potentially not meeting the demands for the resources). Second, by using a model that includes LSTM-RNN layers and attention mechanism layers, the computing system is able to generate more precise predictions of resource utilization.

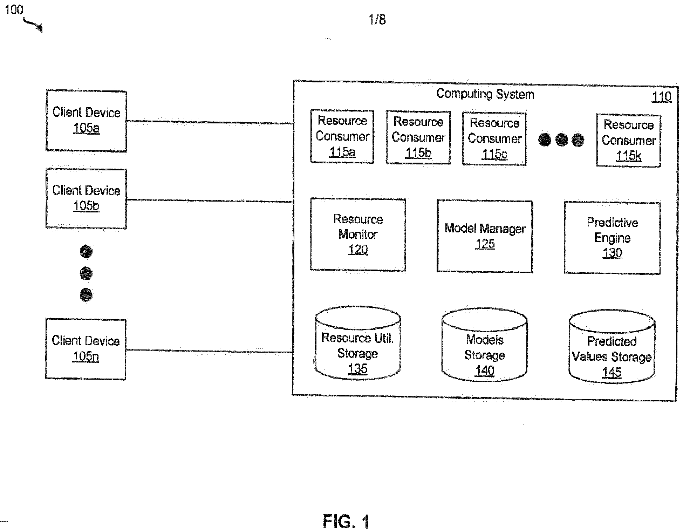

FIG. 1 illustrates a system 100 that automatedly scales resources based on long short-term memory recurrent neural networks and attention mechanisms according to some embodiments. As shown, system 100 includes client devices 105a-n and computing system 110. Each of client devices 105a-n can be configured to communicate and interact with computing system 110. For example, a user of a client device 105a-n may access and interact with one or more of resource consumers 115a-k operating on computing system 110.

As illustrated in FIG. 1, computing system includes resource consumers 115a-k, resource monitor 120, model manager 125, predictive engine 130, and storages 135-145. Resource utilization storage 135 is configured to store metrics representing the utilization of resources provided by computing system 110. Examples of such resources include processors, memory (e.g., random access memory (RAM), storage space (e.g., hard disk storage space), network bandwidth, etc. Examples of metrics representing the utilization of such resources include a processor utilization metric, a memory utilization metric, a storage utilization metric, a response time metric (e.g., the time it takes to respond to a request such as a request for memory, a request to read from or write to a hard disk, a request to query data from a database, or any other type of computing-related task), a bandwidth utilization metric (e.g., throughput), etc. In some embodiments, resource utilization storage 135 stores separate metrics for each resource consumer 115a-k. For instance, in some such embodiments, resource utilization storage 135 may store a first set of metrics representing utilization of resources by resource consumer 115a, a second set of metrics representing utilization of resources by resource consumer 115b, a third set of metrics representing utilization of resources by resource consumer 115c, and so on and so forth.

Models storage 140 can store models generated by model manager 125. In some embodiments, each model stored in models storage 140 is configured to predict utilization of a set of resources by a resource consumer 115 based on a history of utilization of the set of resources by the resource consumer 115. That is, separate models are used to predict utilization of resources for different resource consumers 115. For example, a first model may be configured to predict utilization of a set of resources by resource consumer 115a, a second model may be configured to predict utilization of a set of resources by resource consumer 115b, a third model may be configured to predict utilization of a set of resources by resource consumer 115c, etc. Predicted values storage 145 is configured to store predicted values representing utilization of resources. In some embodiments, storages 135-145 are implemented in a single physical storage while, in other embodiments, storages 135-145 may be implemented across several physical storages. While FIG. 1 shows storages 135-145 as part of computing system 110, one of ordinary skill in the art will appreciate that resource utilization storage 135, models storage 140, and/or predicted values storage 145 may be external to computing system 110 in some embodiments.

Resource consumers 115a-k are each configured to consume resources provided by computing system 110. As mentioned above, examples of resources provided by computing system 110 include processors, memory, storage space, network bandwidth, etc. Each resource consumer 115 may be an application operating on computing system 110, a service operating on computing system 110, a virtual machine operating on computing system 110, a container instantiated by and operating on computing machine 110, a unikernel operating on computing system 110, or any other type of computing element that may consume resources provided by computing system 110.

Resource monitor 120 is responsible for monitoring the utilization of resources by each of resource consumers 115a-k. For example, resource monitor 120 can monitor the utilization of resources by resource consumer 115a, monitor the utilization of resources resource by consumer 115b, monitor the utilization of resources by resource consumer 115c, etc. In some embodiments, resource monitor 120 monitors the utilization of resources by a resource consumer 115 by measuring the utilization of the resources by the resource consumer 115 and storing in resource utilization storage 135 the measured utilization of the resources in terms of metrics representing the utilization of the resources. As described above, examples of such metrics include a processor utilization metric, a memory utilization metric, a storage utilization metric, a response time metric (e.g., the time it takes to respond to a request such as a request for memory, a request to read from or write to a hard disk, a request to query data from a database, or any other type of computing-related task), a bandwidth utilization metric (e.g., throughput), etc. In some embodiments, resource monitor 120 measures the utilization of resources by a resource consumer 115 and stores the measured utilization of the resources in terms of metrics at defined intervals (e.g., once per second, once per ten seconds, once per thirty seconds, once a minute, etc.).

Model manager 125 handles the generation of models. In some embodiments, a model generated by model manager 125 is configured to predict utilization of a resource by a resource consumer 115 at one or more points in time in the future based on a history of utilization of the resource by the resource consumer 115. In some such embodiments, model manager 125 generates a model that includes several LSTM-RNN layers and one or more attention mechanism layers.

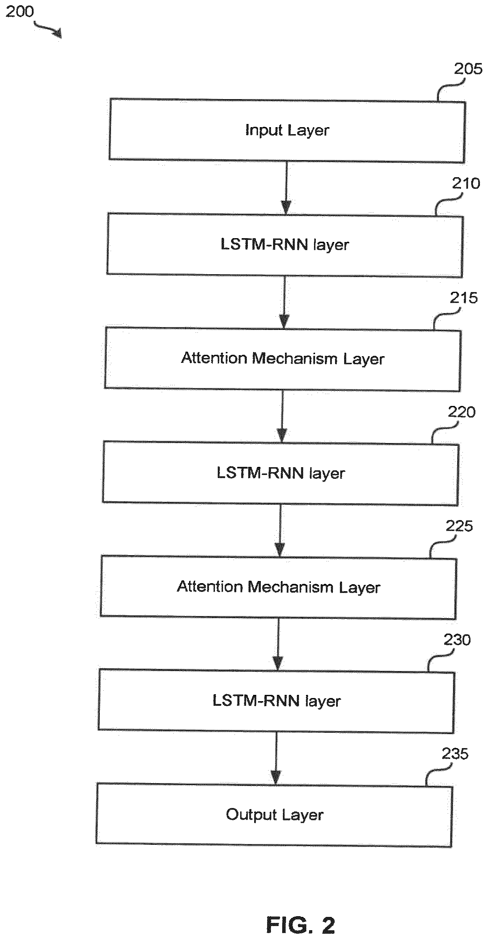

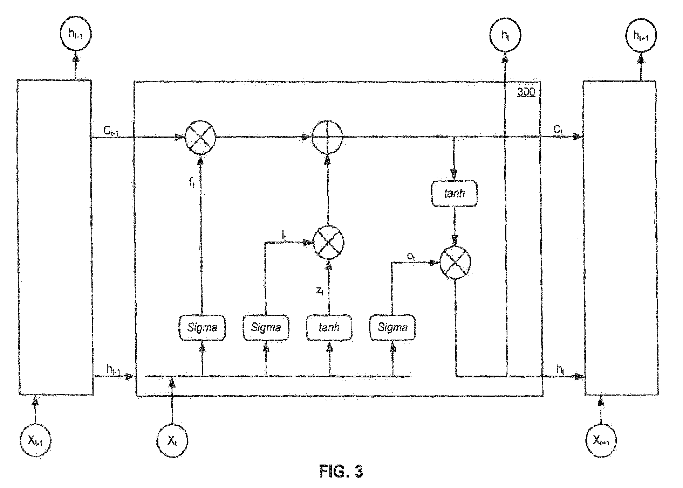

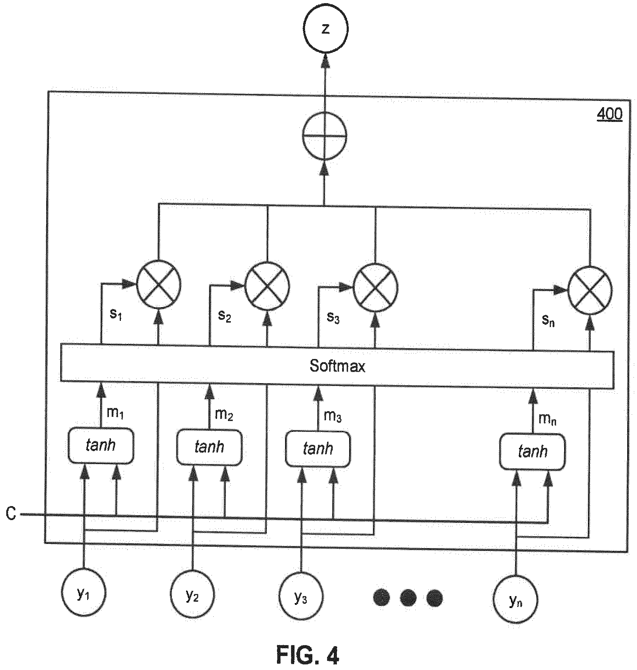

FIG. 2 illustrates a model 200 that includes long short-term memory recurrent neural network layers and attention mechanism layers according to some embodiments. In some embodiments, model manager 125 generates model 200. As shown, model 200 includes input layer 205, LSTM-RNN layer 210, attention mechanism layer 215, LSTM-RNN layer 220, attention mechanism layer 225, LSTM-RNN layer 230, and output layer 235. Input layer 205 is configured to receive input data. In some embodiments, the input data that input layer 205 receives includes a set of time series data associated with utilization of a set of resources by a resource consumer 115. For example, such a set of time series data can include a set of metrics representing the utilization of the set of resources by the resource consumer 115 at a series of instances of time in the past. In some embodiments, input layer 205 performs a set of activation function computations based on the input data and then forwards the results of the computations to LSTM-RNN layer 210. Each of the LSTM-RNN layers 210, 220, and 230 may be implemented by an LSTM-RNN cell described below by reference to FIG. 3. Each of the attention mechanism layers 215 and 225 can be implemented by an attention mechanism described below by reference to FIG. 4. Output layer 235 is configured to output predicted values representing utilization of a resource at a set of intervals of time in the future (e.g., a predicted value representing utilization of a resource at one second in the future, a predicted value representing utilization of a resource at two seconds in the future, a predicted value representing utilization of a resource at three seconds in the future, etc.).

FIG. 2 illustrates one example of a model configured to predict utilization of a resource by a resource consumer 115 at one or more points in time in the future based on a history of utilization of the resource by the resource consumer 115. Any model may be used that includes an input layer followed by an LSTM-RNN layer followed by an attention mechanism layer followed by zero or more pairs of an LSTM-RNN layer and an attention mechanism layer followed by an LSTM-RNN layer and ending with an output layer. For instance, one such model may include an input layer followed by followed by an LSTM-RNN layer followed by an attention mechanism layer followed by an LSTM-RNN layer and ending with an output layer. This particular has zero pairs of an LSTM-RNN layer and an attention mechanism layer. Another example of such a model may include an input layer followed by an LSTM-RNN layer followed by an attention mechanism layer followed by an LSTM-RNN layer followed by an attention mechanism layer (a first pair of an LSTM-RNN layer and an attention mechanism layer) followed by an LSTM-RNN layer followed by an attention mechanism layer (a second pair of an LSTM-RNN layer and an attention mechanism layer) followed by an LSTM-RNN layer and ending with an output layer.

FIG. 3 illustrates long short-term memory recurrent neural network (LSTM-RNN) cell 300 according to some embodiments. In some embodiments, LSTM-RNN cell 300 may be used to implement each of LSTM-RNN layers 210, 220, and 230. As illustrated, LSTM-RNN cell 300 includes a forget gate layer (ft), an input gate layer (it), an input gate modulation layer ($z_t$), and an output gate layer (ot). In addition, LSTM-RNN cell 300 receives a cell state of a previous time interval ($C_{t-1}$), a hidden state of a previous time interval ($h_{t-1}$), and input variables for the present time interval (xt). In some embodiments, input variables $x_t$ may be a vector of input variables. As shown, LSTM-RNN cell 300 outputs a cell state of the present time interval (Ct) and a hidden state of the present time interval (ht). The parameters of LSTM-RNN cell 300 may be determined using the following equations:

$$f_t = \sigma\big(W_f \cdot |h_{t-1}, x_t| + b_f\big)$$

$$i_t = \sigma\big(W_i \cdot |h_{t-1}, x_t| + b_i\big)$$

$$z_t = tanh\big(W_C \cdot |h_{t-1}, x_t| + b_C\big)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

where $f_t$ is a forget gate layer at time interval $t$, $\sigma$ is a sigmoid activation function, $W_f$ is a weight matrix for the forget gate layer, $h_{t-1}$ is a hidden state of time interval $t-1$, $x_t$ are input variables for time interval $t$, $b_f$ is a bias for the forget gate layer, $i_t$ is an input gate layer at time interval $t$, $W_i$ is a weight matrix for the input gate layer, $b_i$ is a bias for the input gate layer, $z_t$ is an input gate modulation layer at time interval $t$, $tanh$ is a hyperbolic tangent activation function, $W_C$ is a weight matrix for the input gate modulation layer, $b_c$ is a bias for the input gate modulation layer, $C_t$ is a cell state at time interval $t$, $C_{t-1}$ is a cell state at time interval $t-1$, $o_t$ is an output gate layer at time interval $t$, $W_o$ is a weight matrix for the output gate layer, $b_o$ is a bias for the output gate layer, and $h_t$ is a hidden state at time interval t.

The forget gate layer is configured to determine what information is thrown away from the cell state. To make such a determination, the forget gate layer applies a sigmoid activation function on the hidden state at time interval $t-1$ and the input variables for time interval $t$. The forget gate layer can output a value between 0 and 1 for each number in the cell state at time interval $t-1$. A value of 1 indicates to completely keep the corresponding number while a value of 0 indicates to completely get remove the corresponding value. The next step is to decide what new information will be stored in the cell state at time interval t. First, the input gate layer applies a sigmoid activation function to determine which values to update. Next, the input gate modulation layer applies a hyperbolic tangent activation function to produce a vector of new candidate values that may be added to the cell state. Then, the results of the input gate layer and the input gate modulation layer are combined to update the cell state. Finally, the output gate layer applies a sigmoid activation function to determine which parts of the cell state will be included in the output. Then, a hyperbolic tangent activation function is applied to the cell state at the time interval t in order to produce values to be between -1 and 1, which is then multiplied by the output in order to output only the determined parts.

FIG. 4 illustrates an attention mechanism 400 according to some embodiments. In some embodiments, attention mechanism 400 may be used to implement each of attention mechanism layers 215 and 225. As shown, attention mechanism 400 receives n number of inputs $y_1$, $y_2$, $y_3$,...,$y_n$ and a context C. In some embodiments, the output of LSTM-RNN cell *300 $h_i$* is the input for $y_i$ and the cell state $C_t$ of LSTM-RNN cell 300 is the input for context C. Attention mechanism 400 outputs a vector z. In some embodiments, vector z is a weighted arithmetic mean of the $y_i$. In some such embodiments, the weights are determined according the relevance of each $y_i$ given the context C.

Returning to FIG. 1, after model manager 125 generates a model, model manager 125 may retrieve from resource utilization storage 135 data associated with utilization of a resource by a resource consumer 115 (e.g., metrics representing the utilization of the resources by the resource consumer 115) over a period of time (e.g., a period of time starting from a point in time at which the resource consumer 115 started using the resource and ending at the current point in time). Next, model manager 125 can train the model with the retrieved data. Once model manager 125 is finished training the model, model manager 125 stores it in models storage 140.

Model manager 125 can also perform updates on models. In some instances, model manager 125 performs updates on models stored in models storage 140 at defined intervals (e.g., once an hour, once a day, once a week, etc.). To update a model, model manager 125 retrieves it from models storage 140. Next, model manager 125 calculates a set of error metrics. In some embodiments, model manager 125 calculates a normalized root mean square error (NRMSE) metric and a normalized mean absolute percentage error (NMAPE) metric. Model manager 125 can calculate an NRMSE metric using the following equations:

$$RMSE = \sqrt{\frac{\sum_{i=1}^{n}(\hat{y}_i - y_i)^2}{n}}$$

$$NRMSE = \frac{RMSE}{y_{max} - y_{min}}$$

where $RMSE$ is the root mean square error value, $y_i$ is the actual value representing the utilization of a resource that model manager 125 retrieves from resource utilization storage 135, $\hat{y}_i$ is the predicted value representing the utilization of the resource that model manager 125 retrieves from predicted values storage 145, $n$ is the number of observations in the dataset for which predictions have been determined, NRMSE is the normalized root mean square error value, $y_{max}$ is the maximum value in the dataset for which predictions have been determined, and $y_{min}$ is the minimum value in the dataset for which predictions have been determined.

Model manager 125 may calculate an NMAPE metric using the following equations:

$$MAPE = \frac{100}{n} \sum_{i=1}^{n} \frac{|\hat{y}_i - y_i|}{y_i}$$

$$NMAPE = \frac{MAPE}{y_{max} - y_{min}}$$

where *MAPE* is the mean absolute percentage error value, $y_i$ is the actual value representing the utilization of a resource that model manager 125 retrieves from resource utilization storage 135, $\hat{y}_i$ is the predicted value representing the utilization of the resource that model manager 125 retrieves from predicted values storage 145, *n* is the number of observations in the dataset for which predictions have been determined, NMAPE is the normalized mean absolute percentage error value, $y_{max}$ is the maximum value in the dataset for which predictions have been determined, and $y_{min}$ is the minimum value in the dataset for which predictions have been determined.

After calculating the set of error metrics, model manager 125 then determines whether one of the error metric values is greater than a defined threshold value (e.g. five percent, ten percent, fifteen percent, twenty-five percent, etc.). If so, model manager 125 updates the model by retrieving from resource utilization storage 135 data associated with utilization of a resource by a resource consumer 115 that has not been used to train the model and training the model with the retrieved data. Upon completing the training of the model, model manager 125 replaces the old version of the model in in models storage 140 with the updated model.

Predictive engine 130 is responsible for predicting utilization of resources by resource consumers 115a-k. For instance, to predict utilization of a resource by a resource consumer 115, predictive engine 130 may retrieve the model from models storage 140 that is configured to predict utilization of the resource by the resource consumer 115. Next, predictive engine 130 retrieves data associated with past utilization of the resource by the resource consumer 115 from resource utilization storage 135. In some embodiments, the retrieved data is a defined number of the most recent data (e.g., the most recent five datum, the most recent ten datum, etc.) associated with past utilization of the resource by the resource consumer 115. In other embodiments, the retrieved data is the most recent data for a defined period of time (e.g., the most recent thirty seconds of data, the most recent five minutes of data, the most recent fifteen minutes of data, etc.) associated with past utilization of the resource by the resource consumer 115. Predictive engine 130 then uses the model to generate a set of predicted values representing utilization of the resource by the resource consumer 115 by using the retrieved data as input to the model. Finally, predictive engine 130 stores the generated set of predicted values in predicted values storage 145. In some embodiments, predictive engine 130 determines predicted values representing utilization of a resource by a resource consumer 115 at defined intervals (e.g., once per second, once per ten seconds, once per thirty seconds, once a minute, etc.).

Predictive engine 130 can perform a variety of operations after generating the set of predicted values representing utilization of a resource by a resource consumer 115. In some cases, predictive engine 130 may scale resources utilized by the resource consumer 115 to meet the predicted demand for the resource. For example, if the resource consumer 115 is an application operating on computing system 110 currently using one gigabyte (GB) of memory and the predicted utilization of memory five seconds from now is two GBs of memory, predictive engine 130 may allocate an additional GB of memory (i.e., scale up) for the application in order to meet the anticipated utilization of two GBs of memory. Predictive engine 130 can also scale down (e.g., deallocate) memory for the application if the predicted utilization of memory is less than one GB of memory. As another example, if the resource consumer 115 is a virtual machine operating on computing system 110 and the predicted utilization of the processor of the virtual machine five seconds from now is 90%, predictive engine 130 can instantiate an additional similarly-configured virtual machine to handle the anticipated increased processing load. Alternatively, or in conjunction with scaling the resources in response to the predicted utilization of the resource, predictive engine 130 can send a client device 105 that may be using the resource consumer 115 a notification warning a user of the client device 105 that utilization of the resource is high.

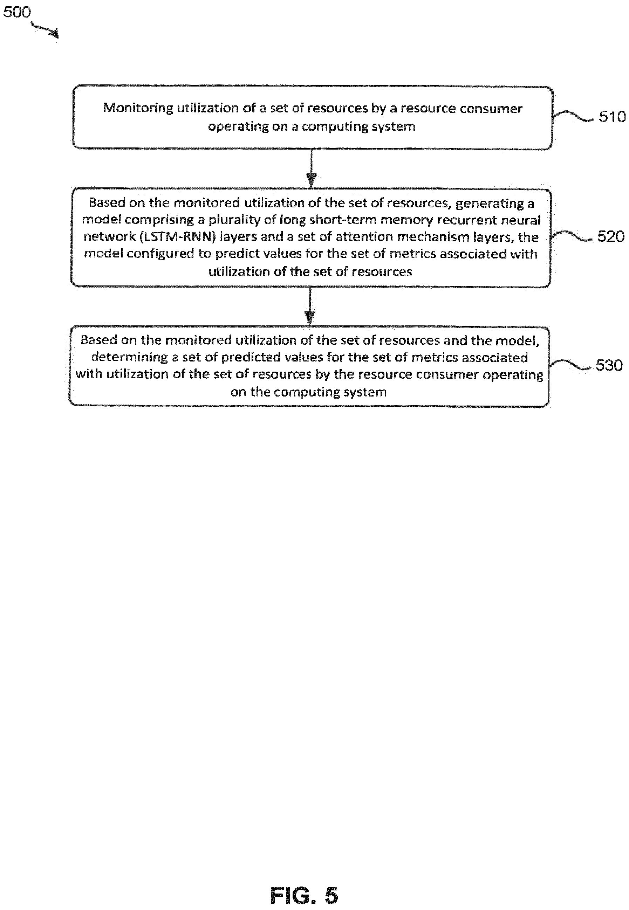

FIG. 5 illustrates a process 500 for predicting resource usage according to some embodiments. In some embodiments, computing system 110 performs process 500. Process 500 begins by monitoring, at 510, utilization of a set of resources by a resource consumer operating on a computing system. Referring to FIG. 1 as an example, resource monitor 120 may monitor utilization of the set of resources by a resource consumer 115 operating on computing system 110. In some embodiments, resource monitor 120 measures the utilization of the set of resources by the resource consumer 115 and stores the measured utilization of the resources in terms of metrics representing the utilization of the set of resources.

Next, based on the monitored utilization of the set of resources, process 500 generates, at 520, a model comprising a plurality of long short-term memory recurrent neural network (LSTM-RNN) layers and a set of attention mechanism layers, the model configured to predict future utilization of the set of resources. Referring to FIGS 1 and 2 as an example, model manager 125 can generate the model comprising the plurality of LSTM-RNN layers and a set of attention mechanism layers, such as model 200 illustrated in FIG. 2. After generating the model, model manager 125 can retrieve from resource utilization storage 135 data associated with utilization of a resource by a resource consumer 115 over a period of time, train the model with the retrieved data, and then store the model in models storage 140 when model manager 125 finishes training of the model.

Finally, based on the monitored utilization of the set of resources and the model, process 500 determines, at 530, a set of predicted values representing utilization of the set of resources by the resource consumer operating on the computing system. Referring to FIG. 1 as an example, predictive engine 130 may determine the set of predicated values by first retrieving the model from models storage 140 that is configured to predict utilization of the resource by the resource consumer 115, retrieving data associated with past utilization of the resource by the resource consumer 115 from resource utilization storage 135, and then using the model to generate the set of predicted values with the retrieved data as inputs to the model. Predictive engine 130 then stores the determined set of predicted values in predicted values storage 145.

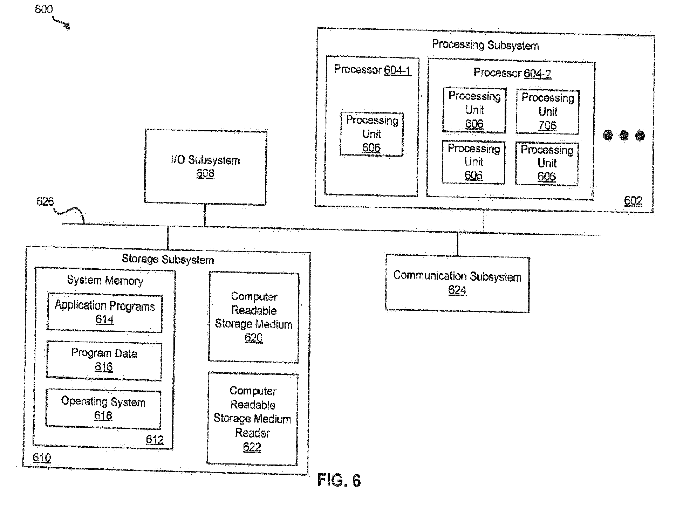

FIG. 6 illustrates an exemplary computer system 600 for implementing various embodiments described above. For example, computer system 600 may be used to implement client devices 105a-n and computing system 110. Computer system 600 may be a desktop computer, a laptop, a server computer, or any other type of computer system or combination thereof. Some or all elements of resource consumers 115a-n, resource monitor 120, model manager 125, predictive engine 130, or combinations thereof can be included or implemented in computer system 600. In addition, computer system 600 can implement many of the operations, methods, and/or processes described above (e.g., process 500). As shown in FIG. 6, computer system 600 includes processing subsystem 602, which communicates, via bus subsystem 626, with input/output (I/O) subsystem 608, storage subsystem 610 and communication subsystem 624.

Bus subsystem 626 is configured to facilitate communication among the various components and subsystems of computer system 600. While bus subsystem 626 is illustrated in FIG. 6 as a single bus, one of ordinary skill in the art will understand that bus subsystem 626 may be implemented as multiple buses. Bus subsystem 626 may be any of several types of bus structures (e.g., a memory bus or memory controller, a peripheral bus, a local bus, etc.) using any of a variety of bus architectures. Examples of bus architectures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnect (PCI) bus, a Universal Serial Bus (USB), etc.

Processing subsystem 602, which can be implemented as one or more integrated circuits (e.g., a conventional microprocessor or microcontroller), controls the operation of computer system 600. Processing subsystem 602 may include one or more processors 604. Each processor 604 may include one processing unit 606 (e.g., a single core processor such as processor 604-1) or several processing units 606 (e.g., a multicore processor such as processor 604-2). In some embodiments, processors 604 of processing subsystem 602 may be implemented as independent processors while, in other embodiments, processors 604 of processing subsystem 602 may be implemented as multiple processors integrate into a single chip or multiple chips. Still, in some embodiments, processors 604 of processing subsystem 602 may be implemented as a combination of independent processors and multiple processors integrated into a single chip or multiple chips.

In some embodiments, processing subsystem 602 can execute a variety of programs or processes in response to program code and can maintain multiple concurrently executing programs or processes. At any given time, some or all of the program code to be executed can reside in processing subsystem 602 and/or in storage subsystem 610. Through suitable programming, processing subsystem 602 can provide various functionalities, such as the functionalities described above by reference to process 500, etc.

I/O subsystem 608 may include any number of user interface input devices and/or user interface output devices. User interface input devices may include a keyboard, pointing devices (e.g., a mouse, a trackball, etc.), a touchpad, a touch screen incorporated into a display, a scroll wheel, a click wheel, a dial, a button, a switch, a keypad, audio input devices with voice recognition systems, microphones, image/video capture devices (e.g., webcams, image scanners, barcode readers, etc.), motion sensing devices, gesture recognition devices, eye gesture (e.g., blinking) recognition devices, biometric input devices, and/or any other types of input devices.

User interface output devices may include visual output devices (e.g., a display subsystem, indicator lights, etc.), audio output devices (e.g., speakers, headphones, etc.), etc. Examples of a display subsystem may include a cathode ray tube (CRT), a flat-panel device (e.g., a liquid crystal display (LCD), a plasma display, etc.), a projection device, a touch screen, and/or any other types of devices and mechanisms for outputting information from computer system 600 to a user or another device (e.g., a printer).

As illustrated in FIG. 6, storage subsystem 610 includes system memory 612, computer-readable storage medium 620, and computer-readable storage medium reader 622. System memory 612 may be configured to store software in the form of program instructions that are loadable and executable by processing subsystem 602 as well as data generated during the execution of program instructions. In some embodiments, system memory 612 may include volatile memory (e.g., random access memory (RAM)) and/or non-volatile memory (e.g., read-only memory (ROM), programmable read-only memory (PROM), erasable programmable read-only memory (EPROM), electrically erasable programmable read-only memory (EEPROM), flash memory, etc.). System memory 612 may include different types of memory, such as static random access memory (SRAM) and/or dynamic random access memory (DRAM). System memory 612 may include a basic input/output system (BIOS), in some embodiments, that is configured to store basic routines to facilitate transferring information between elements within computer system 600 (e.g., during start-up). Such a BIOS may be stored in ROM (e.g., a ROM chip), flash memory, or any other type of memory that may be configured to store the BIOS.

As shown in FIG. 6, system memory 612 includes application programs 614, program data 616, and operating system (OS) 618. OS 618 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome® OS, and the like) and/or mobile operating systems such as Apple iOS, Windows Phone, Windows Mobile, Android, BlackBerry OS, Blackberry 10, and Palm OS, WebOS operating systems.

Computer-readable storage medium 620 may be a non-transitory computer-readable medium configured to store software (e.g., programs, code modules, data constructs, instructions, etc.). Many of the components (e.g., resource consumers 115a-n, resource monitor 120, model manager 125, and predictive engine 130) and/or processes (e.g., process 500) described above may be implemented as software that when executed by a processor or processing unit (e.g., a processor or processing unit of processing subsystem 602) performs the operations of such components and/or processes. Storage subsystem 610 may also store data used for, or generated during, the execution of the software.

Storage subsystem 610 may also include computer-readable storage medium reader 622 that is configured to communicate with computer-readable storage medium 620. Together and, optionally, in combination with system memory 612, computer-readable storage medium 620 may comprehensively represent remote, local, fixed, and/or removable storage devices plus storage media for temporarily and/or more permanently containing, storing, transmitting, and retrieving computer-readable information.

Computer-readable storage medium 620 may be any appropriate media known or used in the art, including storage media such as volatile, non-volatile, removable, non-removable media implemented in any method or technology for storage and/or transmission of information. Examples of such storage media includes RAM, ROM, EEPROM, flash memory or other memory technology, compact disc read-only memory (CD-ROM), digital versatile disk (DVD), Blu-ray Disc (BD), magnetic cassettes, magnetic tape, magnetic disk storage (e.g., hard disk drives), Zip drives, solid-state drives (SSD), flash memory card (e.g., secure digital (SD) cards, CompactFlash cards, etc.), USB flash drives, or any other type of computer-readable storage media or device.

Communication subsystem 624 serves as an interface for receiving data from, and transmitting data to, other devices, computer systems, and networks. For example, communication subsystem 624 may allow computer system 600 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication subsystem 624 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication subsystem 624 may provide components configured for wired communication (e.g., Ethernet) in addition to or instead of components configured for wireless communication.

One of ordinary skill in the art will realize that the architecture shown in FIG. 6 is only an example architecture of computer system 600, and that computer system 600 may have additional or fewer components than shown, or a different configuration of components. The various components shown in FIG. 6 may be implemented in hardware, software, firmware or any combination thereof, including one or more signal processing and/or application specific integrated circuits.

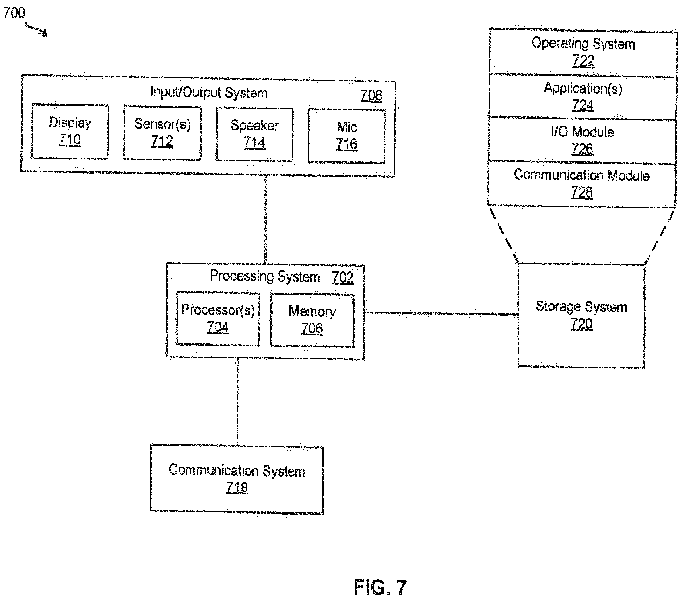

FIG. 7 illustrates an exemplary computing device 700 for implementing various embodiments described above. For example, computing device 700 may be used to implement client devices 105a-n. Computing device 700 may be a cellphone, a smartphone, a wearable device, an activity tracker or manager, a tablet, a personal digital assistant (PDA), a media player, or any other type of mobile computing device or combination thereof. As shown in FIG. 7, computing device 700 includes processing system 702, input/output (I/O) system 708, communication system 718, and storage system 720. These components may be coupled by one or more communication buses or signal lines.

Processing system 702, which can be implemented as one or more integrated circuits (e.g., a conventional microprocessor or microcontroller), controls the operation of computing device 700. As shown, processing system 702 includes one or more processors 704 and memory 706. Processors 704 are configured to run or execute various software and/or sets of instructions stored in memory 706 to perform various functions for computing device 700 and to process data.

Each processor of processors 704 may include one processing unit (e.g., a single core processor) or several processing units (e.g., a multicore processor). In some embodiments, processors 704 of processing system 702 may be implemented as independent processors while, in other embodiments, processors 704 of processing system 702 may be implemented as multiple processors integrate into a single chip. Still, in some embodiments, processors 704 of processing system 702 may be implemented as a combination of independent processors and multiple processors integrated into a single chip.

Memory 706 may be configured to receive and store software (e.g., operating system 722, applications 724, I/O module 726, communication module 728, etc. from storage system 720) in the form of program instructions that are loadable and executable by processors 704 as well as data generated during the execution of program instructions. In some embodiments, memory 706 may include volatile memory (e.g., random access memory (RAM)), non-volatile memory (e.g., read-only memory (ROM), programmable read-only memory (PROM), erasable programmable read-only memory (EPROM), electrically erasable programmable read-only memory (EEPROM), flash memory, etc.), or a combination thereof.

I/O system 708 is responsible for receiving input through various components and providing output through various components. As shown for this example, I/O system 708 includes display 710, one or more sensors 712, speaker 714, and microphone 716. Display 710 is configured to output visual information (e.g., a graphical user interface (GUI) generated and/or rendered by processors 704). In some embodiments, display 710 is a touch screen that is configured to also receive touch-based input. Display 710 may be implemented using liquid crystal display (LCD) technology, light-emitting diode (LED) technology, organic LED (OLED) technology, organic electro luminescence (OEL) technology, or any other type of display technologies. Sensors 712 may include any number of different types of sensors for measuring a physical quantity (e.g., temperature, force, pressure, acceleration, orientation, light, radiation, etc.). Speaker 714 is configured to output audio information and microphone 716 is configured to receive audio input. One of ordinary skill in the art will appreciate that I/O system 708 may include any number of additional, fewer, and/or different components. For instance, I/O system 708 may include a keypad or keyboard for receiving input, a port for transmitting data, receiving data and/or power, and/or communicating with another device or component, an image capture component for capturing photos and/or videos, etc.

Communication system 718 serves as an interface for receiving data from, and transmitting data to, other devices, computer systems, and networks. For example, communication system 718 may allow computing device 700 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication system 718 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication system 718 may provide components configured for wired communication (e.g., Ethernet) in addition to or instead of components configured for wireless communication.

Storage system 720 handles the storage and management of data for computing device 700. Storage system 720 may be implemented by one or more non-transitory machine-readable mediums that are configured to store software (e.g., programs, code modules, data constructs, instructions, etc.) and store data used for, or generated during, the execution of the software.

In this example, storage system 720 includes operating system 722, one or more applications 724, I/O module 726, and communication module 728. Operating system 722 includes various procedures, sets of instructions, software components and/or drivers for controlling and managing general system tasks (e.g., memory management, storage device control, power management, etc.) and facilitates communication between various hardware and software components. Operating system 722 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome® OS, and the like) and/or mobile operating systems such as Apple iOS, Windows Phone, Windows Mobile, Android, BlackBerry OS, Blackberry 10, and Palm OS, WebOS operating systems.

Applications 724 can include any number of different applications installed on computing device 700. Examples of such applications may include a browser application, an address book application, a contact list application, an email application, an instant messaging application, a word processing application, JAVA-enabled applications, an encryption application, a digital rights management application, a voice recognition application, location determination application, a mapping application, a music player application, etc.

I/O module 726 manages information received via input components (e.g., display 710, sensors 712, and microphone 716) and information to be outputted via output components (e.g., display 710 and speaker 714). Communication module 728 facilitates communication with other devices via communication system 718 and includes various software components for handling data received from communication system 718.

One of ordinary skill in the art will realize that the architecture shown in FIG. 7 is only an example architecture of computing device 700, and that computing device 700 may have additional or fewer components than shown, or a different configuration of components. The various components shown in FIG. 7 may be implemented in hardware, software, firmware or any combination thereof, including one or more signal processing and/or application specific integrated circuits.

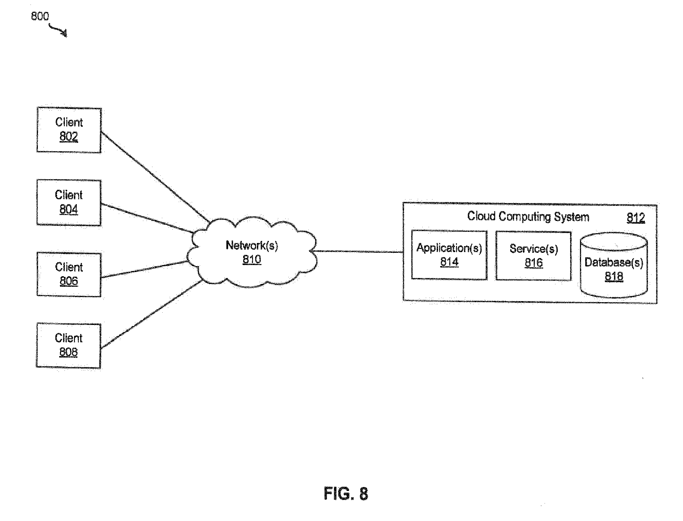

FIG. 8 illustrates an exemplary system 800 for implementing various embodiments described above. For example, client devices 802-808 may be used to implement client devices 105a-n and cloud computing system 812 may be used to implement computing system 110. As shown, system 800 includes client devices 802-808, one or more networks 810, and cloud computing system 812. Cloud computing system 812 is configured to provide resources and data to client devices 802-808 via networks 810. In some embodiments, cloud computing system 800 provides resources to any number of different users (e.g., customers, tenants, organizations, etc.). Cloud computing system 812 may be implemented by one or more computer systems (e.g., servers), virtual machines operating on a computer system, or a combination thereof.

As shown, cloud computing system 812 includes one or more applications 814, one or more services 816, and one or more databases 818. Cloud computing system 800 may provide applications 814, services 816, and databases 818 to any number of different customers in a self-service, subscription-based, elastically scalable, reliable, highly available, and secure manner.

In some embodiments, cloud computing system 800 may be adapted to automatically provision, manage, and track a customer's subscriptions to services offered by cloud computing system 800. Cloud computing system 800 may provide cloud services via different deployment models. For example, cloud services may be provided under a public cloud model in which cloud computing system 800 is owned by an organization selling cloud services and the cloud services are made available to the general public or different industry enterprises. As another example, cloud services may be provided under a private cloud model in which cloud computing system 800 is operated solely for a single organization and may provide cloud services for one or more entities within the organization. The cloud services may also be provided under a community cloud model in which cloud computing system 800 and the cloud services provided by cloud computing system 800 are shared by several organizations in a related community. The cloud services may also be provided under a hybrid cloud model, which is a combination of two or more of the aforementioned different models.

In some instances, any one of applications 814, services 816, and databases 818 made available to client devices 802-808 via networks 810 from cloud computing system 800 is referred to as a "cloud service." Typically, servers and systems that make up cloud computing system 800 are different from the on-premises servers and systems of a customer. For example, cloud computing system 800 may host an application and a user of one of client devices 802-808 may order and use the application via networks 810.

Applications 814 may include software applications that are configured to execute on cloud computing system 812 (e.g., a computer system or a virtual machine operating on a computer system) and be accessed, controlled, managed, etc. via client devices 802-808. In some embodiments, applications 814 may include server applications and/or mid-tier applications (e.g., HTTP (hypertext transport protocol) server applications, FTP (file transfer protocol) server applications, CGI (common gateway interface) server applications, JAVA server applications, etc.). Services 816 are software components, modules, application, etc. that are configured to execute on cloud computing system 812 and provide functionalities to client devices 802-808 via networks 810. Services 816 may be web-based services or on-demand cloud services.

Databases 818 are configured to store and/or manage data that is accessed by applications 814, services 816, and/or client devices 802-808. For instance, storages 135-145 may be stored in databases 818. Databases 818 may reside on a non-transitory storage medium local to (and/or resident in) cloud computing system 812, in a storage-area network (SAN), on a non-transitory storage medium local located remotely from cloud computing system 812. In some embodiments, databases 818 may include relational databases that are managed by a relational database management system (RDBMS). Databases 818 may be a column-oriented databases, row-oriented databases, or a combination thereof. In some embodiments, some or all of databases 818 are in-memory databases. That is, in some such embodiments, data for databases 818 are stored and managed in memory (e.g., random access memory (RAM)).

Client devices 802-808 are configured to execute and operate a client application (e.g., a web browser, a proprietary client application, etc.) that communicates with applications 814, services 816, and/or databases 818 via networks 810. This way, client devices 802-808 may access the various functionalities provided by applications 814, services 816, and databases 818 while applications 814, services 816, and databases 818 are operating (e.g., hosted) on cloud computing system 800. Client devices 802-808 may be computer system 600 or computing device 700, as described above by reference to FIGS. 6 and 7, respectively. Although system 800 is shown with four client devices, any number of client devices may be supported.

Networks 810 may be any type of network configured to facilitate data communications among client devices 802-808 and cloud computing system 812 using any of a variety of network protocols. Networks 810 may be a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A method, executable by a computing device (110, 700), comprising:

monitoring utilization of a set of resources by a resource consumer (115) operating on the computing device (110, 700);
based on the monitored utilization of the set of resources, generating a model comprising a plurality of long short-term memory recurrent neural network, LSTM-RNN, layers (210, 220, 230) and a set of attention mechanism layers (215, 225), the model configured to predict future utilization of the set of resources, wherein the model includes an input layer (205) configured to receive a set of time series data associated with utilization of a set of resources by a resource consumer (115), the input layer (205) followed by an LSTM-RNN layer (210) followed by an attention mechanism layer (215) followed by a zero or more pairs of an LSTM-RNN layer (220) and an attention mechanism layer (225) followed by a LSTM-RNN layer (230 and ending with an output layer (235) configured to output the set of predicted values; and
based on the monitored utilization of the set of resources and the model, determining a set of predicted values representing utilization of the set of resources by the resource consumer (115) operating on the computing device (110, 700),
wherein monitoring utilization of the set of resources by the resource consumer (115) operating on the computing device (110, 700) comprises:

measuring, at each time interval in a plurality of time intervals, utilization of the set of resources by the resource consumer (115) operating on the computing device (110, 700); and
storing the measured utilization at each time interval in the plurality of time intervals in terms of a set of values for a set of metrics representing utilization of the set of resources by the resource consumer (115) operating on the computing device (110, 700); and
wherein generating the model comprises training the model using the set of values for the set of metrics measured at each time interval in a subset of the plurality of time intervals; and
wherein the method further comprises executing a set of instructions for, based on the set of predicted values, adjusting the allocation of resources in the set of resources, wherein:

each of the LSTM-RNN layers (210, 220, 230) is implemented by an LSTM-RNN cell (300), each LSTM-RNN cell (300) receiving a cell state of previous time interval $C_{t-1}$, a hidden state of a previous time interval $h_{t-1}$ and input variables for the present time interval $x_i$ and outputs a cell state of the present time interval $C_t$ and a hidden state of the present time interval $h_t$,
each of the attention mechanism layers (215, 225) is implemented by an attention mechanism (400), the attention mechanism (400) receives a number $(n)$ of inputs $y_1$, $y_2$, $y_3$, ...,$y_n$ and a context C,
an output hidden state $h_i$ of a LSTM-RNN cell (300) of the LSTM-RNN cells is an input $y_i$ of the number $n$ of inputs $y_1$, $y_2$, $y_3$,..., $y_n$ and an output cell state $C_t$ of the LSTM-RNN cell (300) is an input for the context C,
the attention mechanism (400) outputs a vector z,
the vector z is a weighted arithmetic mean of the input $y_i$ of the number $(n)$ of inputs $y_1$, $y_2$, $y_3$, . . . , $y_n$, and a weight for the weighted arithmetic mean is determined according to the relevance of each input $y_i$ of the number $n$ of inputs $y_1$, $y_2$, $y_3$, . . . ,$y_n$ given the context C, wherein:

each input $y_i$ of the number $n$ of inputs $y_1$, $y_2$, $y_3$,. . . , $y_n$ is weighted by a respective weight $s_i$,

$$s_i = softmax(m)_i,$$

$$m_i = tanh(y_i, \mathrm{C}),$$

$softmax(m)_i$ is a *softmax* function on a vector $m$, $m=(m_1, m_2, m_3, ..., m_n)$, evaluated for the i-th component $m_i$; and
*tanh* is hyperbolic tangent activation function, and

wherein:
LSTM-RNN cell (300) includes a forget gate layer, an input gate layer, an input gate modulation layer, and an output gate layer, and wherein the parameters of LSTM-RNN cell (300) are determined using the following equations:

$$f_t = \sigma\left(W_f \cdot |h_{t-1}, x_t| + b_f\right)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

where:

$f_t$ is the forget gate layer at time interval *t*,
$\sigma$ is a sigmoid activation function,
$W_f$ is a weight matrix for the forget gate layer,
$h_{t-1}$ is the hidden state of time interval *t-1*,
$x_t$ are input variables for time interval t,
$b_f$ is a bias for the forget gate layer,
*it is* an input gate layer at time interval *t*,
$W_i$ is a weight matrix for the input gate layer, $b_i$ is a bias for the input gate layer,
$z_t$ is an input gate modulation layer at time interval *t, tanh* is a hyperbolic tangent activation function,
$W_C$ is a weight matrix for the input gate modulation layer,
$b_c$ is a bias for the input gate modulation layer,
$C_t$ *is* a cell state at time interval *t,*
$C_{t-1}$ is a cell state at time interval *t-1,*
$o_t$ is an output gate layer at time interval *t,*
$W_o$ is a weight matrix for the output gate layer,
$b_o$ is a bias for the output gate layer, and
$h_t$ is a hidden state at time interval *t.*

2. The method of claim 1 further comprising:

calculating a set of error metrics based on a plurality of sets of predicted values and a plurality of sets of corresponding values for a set of metrics representing utilization of the set of resources by the resource consumer (115) operating on the computing device (110, 700);
determining whether a value of one of the error metrics in the set of error metrics is greater than a defined threshold value; and
upon determining that the value of one of the error metrics in the set of error metrics is greater than the defined threshold value, updating the model.

3. The method of claim 2, wherein updating the model comprises:

training the model using a set of values for a set of metrics measured at each time interval in a set of most recent time intervals; and

storing the updated model in a storage.

4. The method of any one of claims 1 to claim 3, wherein the method further comprises a set of instructions for sending a notification to a client device warning that utilization of a resource in the set of resources is high.

5. A non-transitory machine-readable medium storing a program executable by at least one processing unit (606) of a computing device (110, 700), the program comprising sets of instructions for:

monitoring utilization of a set of resources by a resource consumer (115) operating on the computing device (110, 700);

based on the monitored utilization of the set of resources, generating a model comprising a plurality of long short-term memory recurrent neural network (LSTM-RNN) layers (210, 220, 230) and a set of attention mechanism layers (215, 225), the model configured to predict future utilization of the set of resources, wherein the model includes an input layer (205) configured to receive a set of time series data associated with utilization of a set of resources by a resource consumer (115), the input layer (205) followed by an LSTM-RNN layer (210) followed by an attention mechanism layer (215) followed by a zero or more pairs of an LSTM-RNN layer (220) and an attention mechanism layer (225) followed by a LSTM-RNN layer (230) and ending with an output layer (235) configured to output the set of predicted values; and

based on the monitored utilization of the set of resources and the model, determining a set of predicted values representing utilization of the set of resources by the resource consumer (115) operating on the computing device; and

wherein monitoring utilization of the set of resources by the resource consumer (115) operating on the computing device (110, 700) comprises:

measuring, at each time interval in a plurality of time intervals, utilization of the set of resources by the resource consumer (115) operating on the computing device (110, 700); and

storing the measured utilization at each time interval in the plurality of time intervals in terms of a set of values for a set of metrics representing utilization of the set of resources by the resource consumer (115) operating on the computing device (110, 700); and

wherein generating the model comprises training the model using the set of values for the set of metrics measured at each time interval in a subset of the plurality of time intervals; and

adjusting the allocation of resources in the set of resources based on the set of predicted values,

wherein:

each of the LSTM-RNN layers (210, 220, 230) is implemented by an LSTM-RNN cell (300), each LSTM-RNN cell (300) receiving a cell state of previous time interval $C_{t-1}$, a hidden state of a previous time interval $h_{t-1}$ and input variables for the present time interval $x_i$ and outputs a cell state of the present time interval $C_t$ and a hidden state of the present time interval $h_t$;

each of the attention mechanism layers (215, 225) is implemented by an attention mechanism (400),

the attention mechanism (400) receives a number $n$ of inputs $y_1, y_2, y_3, \ldots, y_n$ and a context C,

an output hidden state $h_i$ of the LSTM-RNN cell (300) of the LSTM-RNN cells is an input $y_i$ of the number $n$ of inputs $y_1, y_2, y_3, \ldots, y_n$ and an output cell state $C_t$ of the LSTM-RNN cell (300) is an input for the context C,

the attention mechanism (400) outputs a vector z,

the vector z is a weighted arithmetic mean of the input $y_i$ of the number $n$ of inputs $y_1, y_2, y_3, \ldots, y_n$, and

a weight for the weighted arithmetic mean is determined according to the relevance of each input $y_i$ of the number $n$ of inputs $y_1, y_2, y_3, ..., y_n$ given the context C,

wherein:

each input $y_i$ of the number $n$ of inputs $y_1, y_2, y_3, \ldots, y_n$ is weighted by a respective weight $s_i$

$$s_i = softmax(m)_i,$$

$$m_i = tanh(y_i, \text{C}),$$

$softmax(m)_i$ is a *softmax* function on a vector $m$, $m=(m_1, m_2, m_3, ..., m_n)$, evaluated for the i-th component $m_i$; and

*tanh* is hyperbolic tangent activation function, and

wherein:

LSTM-RNN cell (300) includes a forget gate layer, an input gate layer, an input gate modulation layer, and an output gate layer, and wherein the parameters of LSTM-RNN cell (300) are determined using the following equations:

$$f_t = \sigma\left(W_f \cdot |h_{t-1}, x_t| + b_f\right)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

where:

$f_t$ is the forget gate layer at time interval $t$,
$\sigma$ is a sigmoid activation function,
$W_f$ is a weight matrix for the forget gate layer,
$h_{t-1}$ is the hidden state of time interval $t-1$,
$x_t$ are input variables for time interval t,
$b_f$ is a bias for the forget gate layer,
*it is* an input gate layer at time interval $t$,
$W_i$ is a weight matrix for the input gate layer, $b_i$ is a bias for the input gate layer,
$z_t$ is an input gate modulation layer at time interval $t$, *tanh* is a hyperbolic tangent activation function,
$W_C$ is a weight matrix for the input gate modulation layer,
$b_c$ is a bias for the input gate modulation layer,
$C_t$ *is* a cell state at time interval $t$,
$C_{t-1}$ is a cell state at time interval $t-1$,
$o_t$ is an output gate layer at time interval $t$,
$W_o$ is a weight matrix for the output gate layer,
$b_o$ is a bias for the output gate layer, and
$h_t$ is a hidden state at time interval $t$.

6. A system (100) comprising:

a set of processing units (606); and
a non-transitory machine-readable medium storing instructions that when executed by at least one processing unit (606) in the set of processing units (606) cause the at least one processing unit (606) to:

monitor utilization of a set of resources by a resource consumer (115) operating on the system (100);
based on the monitored utilization of the set of resources, generating a model comprising a plurality of long short-term memory recurrent neural network (LSTM-RNN) layers (210, 220, 230) and a set of attention mechanism layers (215, 225), the model configured to predict future utilization of the set of resources, wherein the model includes an input layer (205) configured to receive a set of time series data associated with utilization of a set of resources by a resource consumer (115), the input layer (205) followed by an LSTM-RNN layer (210) followed by an attention mechanism layer (215) followed by a zero or more pairs of an LSTM-RNN layer (220) and an attention mechanism layer (225) followed by a LSTM-RNN layer (230) and ending with an output layer (235) configured to output the set of predicted values; and

based on the monitored utilization of the set of resources and the model, determine a set of predicted values representing utilization of the set of resources by the resource consumer (115) operating on the system (100), and wherein monitoring utilization of the set of resources by the resource consumer (115) operating on the system (100) comprises:

measuring, at each time interval in a plurality of time intervals, utilization of the set of resources by the resource consumer (115) operating on the system (100); and

storing the measured utilization at each time interval in the plurality of time intervals in terms of a set of values for a set of metrics representing utilization of the set of resources by the resource consumer (115) operating on the system (100); and

wherein generating the model comprises training the model using the set of values for the set of metrics measured at each time interval in a subset of the plurality of time intervals; and

adjusting the allocation of resources in the set of resources based on the set of predicted values,

wherein:

each of the LSTM-RNN layers (210, 220, 230) is configured to be implemented by an LSTM-RNN cell (300), each LSTM-RNN cell (300) receiving a cell state of previous time interval $C_{t-1}$, a hidden state of a previous time interval $h_{t-1}$ and input variables for the present time interval $x_i$ and outputs a cell state of the present time interval $C_t$ and a hidden state of the present time interval $h_t$,

each of the attention mechanism layers (215, 225) is configured to be implemented by an attention mechanism (400),

the attention mechanism (400) is configured to receive a number $n$ of inputs $y_1$, $y_2$, $y_3$, ... , $y_n$ and a context C, an output hidden state $h_i$ of a LSTM-RNN cell (300) of the LSTM-RNN cells is an input $y_i$ of the number $n$ of inputs $y_1$, $y_2$, $y_3$, . . . , $y_n$ and an output cell state $C_t$ of the LSTM-RNN cell (300) is an input for the context C,

the attention mechanism (400) outputs a vector z,

the vector z is a weighted arithmetic mean of the number $n$ of inputs $y_1$, $y_2$, $y_3$, . .., $y_n$, and

a weight for the weighted arithmetic mean is determined according to the relevance of each input $y_i$ of the number $n$ of inputs $y_1$, $y_2$, $y_3$, . . . , $y_n$ given the context C, wherein:

each input $y_i$ of the number $n$ of inputs $y_1$, $y_2$, $y_3$, . . . , $y_n$ is weighted by a respective weight $s_i$

$$s_i = softmax(m)_I,$$

$$m_i = tanh(y_i, \text{C}),$$

$softmax(m)_i$ is a *softmax* function on a vector $m$, $m=(m_1, m_2, m_3, \ldots, m_n)$, evaluated for the i-th component $m_i$; and

*tanh* is hyperbolic tangent activation function, and

wherein:

LSTM-RNN cell (300) includes a forget gate layer, an input gate layer, an input gate modulation layer, and an output gate layer, and wherein the parameters of LSTM-RNN cell (300) are determined using the following equations:

$$f_t = \sigma\left(W_f \cdot |h_{t-1}, x_t| + b_f\right)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

where:

$f_t$ is the forget gate layer at time interval $t$,
$\sigma$ is a sigmoid activation function,
$W_f$ is a weight matrix for the forget gate layer,
$h_{t-1}$ is the hidden state of time interval $t-1$,
$x_t$ are input variables for time interval $t$,
$b_f$ is a bias for the forget gate layer,
$it$ is an input gate layer at time interval $t$,
$W_i$ is a weight matrix for the input gate layer, $b_i$ is a bias for the input gate layer,
$z_t$ is an input gate modulation layer at time interval $t$, $tanh$ is a hyperbolic tangent activation function,
$W_C$ is a weight matrix for the input gate modulation layer,
$b_c$ is a bias for the input gate modulation layer,
$C_t$ is a cell state at time interval $t$,
$C_{t-1}$ is a cell state at time interval $t-1$,
$o_t$ is an output gate layer at time interval $t$,
$W_o$ is a weight matrix for the output gate layer,
$b_o$ is a bias for the output gate layer, and
$h_t$ is a hidden state at time interval $t$.

7. The system (100) of claim 6, wherein the instructions further cause the at least one processing unit (606) to:

calculate a set of error metrics based on a plurality of sets of predicted values and a plurality of sets of corresponding values for a set of metrics representing utilization of the set of resources by the resource consumer (115) operating on the system (100);
determine whether a value of one of the error metrics in the set of error metrics is greater than a defined threshold value; and
upon determining that the value of one of the error metrics in the set of error metrics is greater than the defined threshold value, update the model.

8. The system (100) of claim 7, wherein updating the model comprises:

training the model using a set of values for a set of metrics measured at each time interval in a set of most recent time intervals; and
storing the updated model in a storage.

9. The system (100) of any one of claims 6 to claim 8, wherein the instructions further cause the at least one processing unit (606) to, based on the set of predicted values, adjust the allocation of resources in the set of resources.

## Patentansprüche

1. Verfahren, das durch eine Rechenvorrichtung (110, 700) ausführbar ist, umfassend:

Überwachen der Nutzung eines Satzes von Ressourcen durch einen Ressourcenverbraucher (115), der auf der Rechenvorrichtung (110, 700) arbeitet;
auf der Basis der überwachten Nutzung des Satzes von Ressourcen, Erzeugen eines Modells, das eine Mehrzahl von rekurrenten neuronalen langes Kurzzeitgedächtnis-Netz-, LSTM-RNN-, Schichten (210, 220, 230) und einen Satz von Aufmerksamkeitsmechanismusschichten (215, 225) umfasst, wobei das Modell zum Vorhersagen einer zukünftigen Nutzung des Satzes von Ressourcen ausgebildet ist, wobei das Modell eine Eingabeschicht (205) umfasst, die zum Empfangen eines Satzes von Zeitreihendaten ausgebildet ist, die mit der Nutzung eines Satzes von Ressourcen durch einen Ressourcenverbraucher (115) verknüpft sind, wobei auf die Eingabeschicht (205) eine LSTM-RNN-Schicht (210) folgt, auf die eine Aufmerksamkeitsmechanismusschicht (215) folgt, auf die eine Null oder mehrere Paare einer LSTM-RNN-Schicht (220) folgt/folgen und eine Aufmerksamkeitsmechanismusschicht (225) folgt, auf die eine LSTM-RNN-Schicht (230) folgt und die mit einer Ausgabeschicht (235) endet, die zum Ausgeben des Satzes von vorhergesagten Werten ausgebildet ist; und

auf der Basis der überwachten Nutzung des Satzes von Ressourcen und des Modells, Bestimmen eines Satzes von vorhergesagten Werten, welche die Nutzung des Satzes von Ressourcen durch den Ressourcenverbraucher (115) repräsentieren, der auf der Rechenvorrichtung (110, 700) arbeitet,

wobei das Überwachen der Nutzung des Satzes von Ressourcen durch den Ressourcenverbraucher (115), der auf der Rechenvorrichtung (110, 700) arbeitet, umfasst:

Messen, bei jedem Zeitintervall in einer Mehrzahl von Zeitintervallen, der Nutzung des Satzes von Ressourcen durch den Ressourcenverbraucher (115), der auf der Rechenvorrichtung (110, 700) arbeitet; und

Speichern der gemessenen Nutzung bei jedem Zeitintervall in der Mehrzahl von Zeitintervallen bezüglich eines Satzes von Werten für einen Satz von Kennzahlen, welche die Nutzung des Satzes von Ressourcen durch den Ressourcenverbraucher (115) repräsentieren, der auf der Rechenvorrichtung (110, 700) arbeitet; und

wobei das Erzeugen des Modells das Trainieren des Modells unter Verwendung des Satzes von Werten für den Satz von Kennzahlen umfasst, die bei jedem Zeitintervall in einem Teilsatz der Mehrzahl von Zeitintervallen gemessen werden; und

wobei das Verfahren ferner das Ausführen eines Satzes von Anweisungen zum Einstellen der Zuordnung von Ressourcen in dem Satz von Ressourcen auf der Basis des Satzes von vorhergesagten Werten umfasst,

wobei:

jede der LSTM-RNN-Schichten (210, 220, 230) durch eine LSTM-RNN-Zelle (300) implementiert ist, wobei jede LSTM-RNN-Zelle (300) einen Zellenzustand des vorhergehenden Zeitintervalls $C_{t-1}$, einen verborgenen Zustand eines vorhergehenden Zeitintervalls $h_{t-1}$ und Eingabevariablen für das vorliegende Zeitintervall $x_i$ empfängt und einen Zellenzustand des vorliegenden Zeitintervalls $C_t$ und einen verborgenen Zustand des vorliegenden Zeitintervalls htausgibt,

jede der Aufmerksamkeitsmechanismusschichten (215, 225) durch einen Aufmerksamkeitsmechanismus (400) implementiert ist, wobei der Aufmerksamkeitsmechanismus (400) eine Anzahl (n) von Eingaben $y_1, y_2, y_3, \ldots, y_n$ und einen Kontext C empfängt,

eine Ausgabe des verborgenen Zustands $h_i$ einer LSTM-RNN-Zelle (300) der LSTM-RNN-Zellen eine Eingabe $y_i$ der Anzahl $n$ von Eingaben $y_1, y_2, y_3, \ldots, y_n$ ist und eine Ausgabe des Zellenzustands $C_t$ der LSTM-RNN-Zelle (300) eine Eingabe für den Kontext C ist,

der Aufmerksamkeitsmechanismus (400) einen Vektor z ausgibt,

der Vektor z ein gewichteter arithmetischer Mittelwert der Eingabe $y_i$ der Anzahl (n) von Eingaben $y_1, y_2, y_3, \ldots, y_n$ ist, und

eine Gewichtung für den gewichteten arithmetischen Mittelwert gemäß der Relevanz jeder Eingabe $y_i$ der Anzahl $n$ von Eingaben $y_1, y_2, y_3, \ldots, y_n$ bei gegebenem Kontext C bestimmt wird,

wobei:

jede Eingabe $y_i$ der Anzahl $n$ von Eingaben $y_1, y_2, y_3, \ldots, y_n$ durch eine jeweilige Gewichtung $s_i$ gewichtet wird,

$$s_i = softmax(m)_i,$$

$$m_i = tanh(y_i, C),$$

$softmax(m)$ eine $softmax$-$Funktion$ auf einem Vektor $m$, $m=(m_1, m_2, m_3, \ldots, m_n)$ ist, die für die i-te Komponente $m_i$ bewertet wird; und

$tanh$ eine hyperbolische Tangentenaktivierungsfunktion ist, und

wobei:

LSTM-RNN-Zelle (300) eine Vergessen-Tor-Schicht ("forget gate layer"), eine Eingabetor-Schicht ("input gate layer"), eine Eingabetor-Modulierungsschicht und eine Ausgabetor-Schicht ("output gate layer") umfasst, und wobei die Parameter der LSTM-RNN-Zelle (300) unter Verwendung der folgenden Gleichungen bestimmt werden:

$$f_t = \sigma\big(W_f \cdot |h_{t-1}, x_t| + b_f\big)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

wobei:

$f_t$ die Vergessen-Tor-Schicht bei dem Zeitintervall $t$ ist,
$\sigma$ eine sigmoidale Aktivierungsfunktion ist,
$W_f$ eine Gewichtungsmatrix für die Vergessen-Tor-Schicht ist,
$h_{t-1}$ der verborgene Zustand des Zeitintervalls $t$-1 ist,
$x_t$ Eingabevariablen für das Zeitintervall $t$ sind,
$b_f$ eine Abweichung ("bias") für die Vergessen-Tor-Schicht ist,
$i_t$ eine Eingabetor-Schicht bei dem Zeitintervall $t$ ist,
$W_i$ eine Gewichtungsmatrix für die Eingabetor-Schicht ist, $b_i$ eine Abweichung für die Eingabetor-Schicht ist,
$z_t$ eine Eingabetor-Modulierungsschicht bei dem Zeitintervall $t$ ist, $tanh$ eine hyperbolische Tangentenaktivierungsfunktion ist,
$W_C$ eine Gewichtungsmatrix für die Eingabetor-Modulierungsschicht ist,
$b_c$ eine Abweichung für die Eingabetor-Modulierungsschicht ist,
$C_t$ ein Zellenzustand bei dem Zeitintervall $t$ ist,
$C_{t-1}$ ein Zellenzustand bei dem Zeitintervall $t$-1 ist,
$o_t$ eine Ausgabetor-Schicht bei dem Zeitintervall $t$ ist,
$W_o$ eine Gewichtungsmatrix für die Ausgabetor-Schicht ist,
$b_o$ eine Abweichung für die Ausgabetor-Schicht ist, und
$h_t$ ein verborgener Zustand bei dem Zeitintervall $t$ ist.

2. Verfahren nach Anspruch 1, ferner umfassend:

Berechnen eines Satzes von Fehlerkennzahlen auf der Basis einer Mehrzahl von Sätzen von vorhergesagten Werten und einer Mehrzahl von Sätzen von entsprechenden Werten für einen Satz von Kennzahlen, welche die Nutzung des Satzes von Ressourcen durch den Ressourcenverbraucher (115) repräsentieren, der auf der Rechenvorrichtung (110, 700) arbeitet;
Bestimmen, ob ein Wert von einer der Fehlerkennzahlen in dem Satz von Fehlerkennzahlen größer ist als ein festgelegter Schwellenwert; und
nach dem Bestimmen, dass der Wert von einer der Fehlerkennzahlen in dem Satz von Fehlerkennzahlen größer ist als der festgelegte Schwellenwert, Aktualisieren des Modells.

3. Verfahren nach Anspruch 2, wobei das Aktualisieren des Modells umfasst:

Trainieren des Modells unter Verwendung eines Satzes von Werten für einen Satz von Kennzahlen, die bei jedem Zeitintervall in einem Satz von neuesten Zeitintervallen gemessen werden; und
Speichern des aktualisierten Modells in einem Speicher.

4. Verfahren nach einem von Anspruch 1 bis Anspruch 3, wobei das Verfahren ferner einen Satz von Anweisungen zum Senden einer Benachrichtigung zu einer Clientvorrichtung umfasst, die warnt, dass die Nutzung einer Ressource in dem Satz von Ressourcen hoch ist.

**5.** Nicht-flüchtiges, maschinenlesbares Medium, das ein Programm speichert, das durch mindestens eine Verarbeitungseinheit (606) einer Rechenvorrichtung (110, 700) ausführbar ist, wobei das Programm Sätze von Anweisungen zum:

Überwachen der Nutzung eines Satzes von Ressourcen durch einen Ressourcenverbraucher (115), der auf der Rechenvorrichtung (110, 700) arbeitet;

auf der Basis der überwachten Nutzung des Satzes von Ressourcen, Erzeugen eines Modells, das eine Mehrzahl von rekurrenten neuronalen langes Kurzzeitgedächtnis-Netz (LSTM-RNN)-Schichten (210, 220, 230) und einen Satz von Aufmerksamkeitsmechanismusschichten (215, 225) umfasst, wobei das Modell zum Vorhersagen einer zukünftigen Nutzung des Satzes von Ressourcen ausgebildet ist, wobei das Modell eine Eingabeschicht (205) umfasst, die zum Empfangen eines Satzes von Zeitreihendaten ausgebildet ist, die mit der Nutzung eines Satzes von Ressourcen durch einen Ressourcenverbraucher (115) verknüpft sind, wobei auf die Eingabeschicht (205) eine LSTM-RNN-Schicht (210) folgt, auf die eine Aufmerksamkeitsmechanismusschicht (215) folgt, auf die eine Null oder mehrere Paare einer LSTM-RNN-Schicht (220) folgt/folgen und eine Aufmerksamkeitsmechanismusschicht (225) folgt, auf die eine LSTM-RNN-Schicht (230) folgt und die mit einer Ausgabeschicht (235) endet, die zum Ausgeben des Satzes von vorhergesagten Werten ausgebildet ist; und

auf der Basis der überwachten Nutzung des Satzes von Ressourcen und des Modells, Bestimmen eines Satzes von vorhergesagten Werten umfasst, welche die Nutzung des Satzes von Ressourcen durch den Ressourcenverbraucher (115) repräsentieren, der auf der Rechenvorrichtung arbeitet,

wobei das Überwachen der Nutzung des Satzes von Ressourcen durch den Ressourcenverbraucher (115), der auf der Rechenvorrichtung (110, 700) arbeitet, umfasst:

Messen, bei jedem Zeitintervall in einer Mehrzahl von Zeitintervallen, der Nutzung des Satzes von Ressourcen durch den Ressourcenverbraucher (115), der auf der Rechenvorrichtung (110, 700) arbeitet; und

Speichern der gemessenen Nutzung bei jedem Zeitintervall in der Mehrzahl von Zeitintervallen bezüglich eines Satzes von Werten für einen Satz von Kennzahlen, welche die Nutzung des Satzes von Ressourcen durch den Ressourcenverbraucher (115) repräsentieren, der auf der Rechenvorrichtung (110, 700) arbeitet; und

wobei das Erzeugen des Modells das Trainieren des Modells unter Verwendung des Satzes von Werten für den Satz von Kennzahlen umfasst, die bei jedem Zeitintervall in einem Teilsatz der Mehrzahl von Zeitintervallen gemessen werden; und

Einstellen der Zuordnung von Ressourcen in dem Satz von Ressourcen auf der Basis des Satzes von vorhergesagten Werten,

wobei:

jede der LSTM-RNN-Schichten (210, 220, 230) durch eine LSTM-RNN-Zelle (300) implementiert ist, wobei jede LSTM-RNN-Zelle (300) einen Zellenzustand des vorhergehenden Zeitintervalls $C_{t-1}$, einen verborgenen Zustand eines vorhergehenden Zeitintervalls $h_{t-1}$ und Eingabevariablen für das vorliegende Zeitintervall $x_i$ empfängt und einen Zellenzustand des vorliegenden Zeitintervalls $C_t$ und einen verborgenen Zustand des vorliegenden Zeitintervalls htausgibt,

jede der Aufmerksamkeitsmechanismusschichten (215, 225) durch einen Aufmerksamkeitsmechanismus (400) implementiert ist,

der Aufmerksamkeitsmechanismus (400) eine Anzahl $(n)$ von Eingaben $y_1, y_2, y_3, \ldots, y_n$ und einen Kontext C empfängt,

eine Ausgabe des verborgenen Zustands $h_i$ einer LSTM-RNN-Zelle (300) der LSTM-RNN-Zellen eine Eingabe $y_i$ der Anzahl $n$ von Eingaben $y_1, y_2, y_3, \ldots, y_n$ ist und eine Ausgabe des Zellenzustands $C_t$ der LSTM-RNN-Zelle (300) eine Eingabe für den Kontext C ist,

der Aufmerksamkeitsmechanismus (400) einen Vektor z ausgibt,

der Vektor z ein gewichteter arithmetischer Mittelwert der Eingabe $y_i$ der Anzahl $(n)$ von Eingaben $y_1, y_2, y_3, \ldots, y_n$ ist, und

eine Gewichtung für den gewichteten arithmetischen Mittelwert gemäß der Relevanz jeder Eingabe $y_i$ der Anzahl $n$ von Eingaben $y_1, y_2, y_3, \ldots, y_n$ bei gegebenem Kontext C bestimmt wird,

wobei:

jede Eingabe $y_i$ der Anzahl $n$ von Eingaben $y_1, y_2, y_3, \ldots, y_n$ durch eine jeweilige Gewichtung $s_i$ gewichtet wird,

$$s_i = softmax(m)_i$$

$$m_i = tanh(y_i, C),$$

softmax(m)$_i$ eine *softmax-Funktion* auf einem Vektor *m*, $m=(m_1, m_2, m_3, ..., m_n)$ ist, die für die i-te Komponente $m_i$ bewertet wird; und
*tanh* eine hyperbolische Tangentenaktivierungsfunktion ist, und

wobei:
LSTM-RNN-Zelle (300) eine Vergessen-Tor-Schicht, eine Eingabetor-Schicht, an Eingabetor-Modulierungsschicht und eine Ausgabetor-Schicht umfasst, und wobei die Parameter der LSTM-RNN-Zelle (300) unter Verwendung der folgenden Gleichungen bestimmt werden:

$$f_t = \sigma\big(W_f \cdot |h_{t-1}, x_t| + b_f\big)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

wobei:

$f_t$ die Vergessen-Tor-Schicht bei dem Zeitintervall *t* ist,
$\sigma$ eine sigmoidale Aktivierungsfunktion ist,
$W_f$ eine Gewichtungsmatrix für die Vergessen-Tor-Schicht ist,
$h_{t-1}$ der verborgene Zustand des Zeitintervalls *t-1* ist,
$x_t$ Eingabevariablen für das Zeitintervall *t* sind,
$b_f$ eine Abweichung für die Vergessen-Tor-Schicht ist,
$i_t$ eine Eingabetor-Schicht bei dem Zeitintervall *t* ist,
$W_i$ eine Gewichtungsmatrix für die Eingabetor-Schicht ist, $b_i$ eine Abweichung für die Eingabetor-Schicht ist,
$z_t$ eine Eingabetor-Modulierungsschicht bei dem Zeitintervall *t* ist, *tanh* eine hyperbolische Tangentenaktivierungsfunktion ist,
$W_C$ eine Gewichtungsmatrix für die Eingabetor-Modulierungsschicht ist,
$b_C$ eine Abweichung für die Eingabetor-Modulierungsschicht ist,
$C_t$ ein Zellenzustand bei dem Zeitintervall *t* ist,
$C_{t-1}$ ein Zellenzustand bei dem Zeitintervall t-*1* ist,
$o_t$ eine Ausgabetor-Schicht bei dem Zeitintervall *t* ist,
$W_o$ eine Gewichtungsmatrix für die Ausgabetor-Schicht ist,
$b_o$ eine Abweichung für die Ausgabetor-Schicht ist, und
$h_t$ ein verborgener Zustand bei dem Zeitintervall *t* ist.

6. System (100), umfassend:

einen Satz von Verarbeitungseinheiten (606); und
ein nicht-flüchtiges, maschinenlesbares Medium, das Anweisungen speichert, die, wenn sie durch mindestens eine Verarbeitungseinheit (606) in dem Satz von Verarbeitungseinheiten (606) ausgeführt werden, bewirken, dass die mindestens eine Verarbeitungseinheit (606):

die Nutzung eines Satzes von Ressourcen durch einen Ressourcenverbraucher (115) überwacht, der auf dem System (100) arbeitet;

auf der Basis der überwachten Nutzung des Satzes von Ressourcen, ein Modell erzeugt, das eine Mehrzahl von rekurrenten neuronalen langes Kurzzeitgedächtnis-Netz (LSTM-RNN)-Schichten (210, 220, 230) und einen Satz von Aufmerksamkeitsmechanismusschichten (215, 225) umfasst, wobei das Modell zum Vorhersagen einer zukünftigen Nutzung des Satzes von Ressourcen ausgebildet ist, wobei das Modell eine Eingabeschicht (205) umfasst, die zum Empfangen eines Satzes von Zeitreihendaten ausgebildet ist, die mit der Nutzung eines Satzes von Ressourcen durch einen Ressourcenverbraucher (115) verknüpft sind, wobei auf die Eingabeschicht (205) eine LSTM-RNN-Schicht (210) folgt, auf die eine Aufmerksamkeitsmechanismusschicht (215) folgt, auf die eine Null oder mehrere Paare einer LSTM-RNN-Schicht (220) folgt/folgen und eine Aufmerksamkeitsmechanismusschicht (225) folgt, auf die eine LSTM-RNN-Schicht (230) folgt und die mit einer Ausgabeschicht (235) endet, die zum Ausgeben des Satzes von vorhergesagten Werten ausgebildet ist; und

auf der Basis der überwachten Nutzung des Satzes von Ressourcen und des Modells, einen Satz von vorhergesagten Werten bestimmt, welche die Nutzung des Satzes von Ressourcen durch den Ressourcenverbraucher (115) repräsentieren, der auf dem System (100) arbeitet, und wobei das Überwachen der Nutzung des Satzes von Ressourcen durch den Ressourcenverbraucher (115), der auf dem System (100) arbeitet, umfasst:

Messen, bei jedem Zeitintervall in einer Mehrzahl von Zeitintervallen, der Nutzung des Satzes von Ressourcen durch den Ressourcenverbraucher (115), der auf dem System (100) arbeitet; und

Speichern der gemessenen Nutzung bei jedem Zeitintervall in der Mehrzahl von Zeitintervallen bezüglich eines Satzes von Werten für einen Satz von Kennzahlen, welche die Nutzung des Satzes von Ressourcen durch den Ressourcenverbraucher (115) repräsentieren, der auf dem System (100) arbeitet; und

wobei das Erzeugen des Modells das Trainieren des Modells unter Verwendung des Satzes von Werten für den Satz von Kennzahlen umfasst, die bei jedem Zeitintervall in einem Teilsatz der Mehrzahl von Zeitintervallen gemessen werden; und

Einstellen der Zuordnung von Ressourcen in dem Satz von Ressourcen auf der Basis des Satzes von vorhergesagten Werten,

wobei:

jede der LSTM-RNN-Schichten (210, 220, 230) zum Implementieren durch eine LSTM-RNN-Zelle (300) ausgebildet ist, wobei jede LSTM-RNN-Zelle (300) einen Zellenzustand des vorhergehenden Zeitintervalls $C_{t-1}$, einen verborgenen Zustand eines vorhergehenden Zeitintervalls $h_{t-1}$ und Eingabevariablen für das vorliegende Zeitintervall $x_i$ empfängt und einen Zellenzustand des vorliegenden Zeitintervalls $C_t$ und einen verborgenen Zustand des vorliegenden Zeitintervalls htausgibt,

jede der Aufmerksamkeitsmechanismusschichten (215, 225) zum Implementieren durch einen Aufmerksamkeitsmechanismus (400) ausgebildet ist,

wobei der Aufmerksamkeitsmechanismus (400) zum Empfangen einer Anzahl $(n)$ von Eingaben $y_1, y_2, y_3, \ldots, y_n$ und eines Kontexts C ausgebildet ist,

eine Ausgabe des verborgenen Zustands $h_i$ einer LSTM-RNN-Zelle (300) der LSTM-RNN-Zellen eine Eingabe $y_i$ der Anzahl $n$ von Eingaben $y_1, y_2, y_3, \ldots, y_n$ ist und eine Ausgabe des Zellenzustands $C_t$ der LSTM-RNN-Zelle (300) eine Eingabe für den Kontext C ist,

der Aufmerksamkeitsmechanismus (400) einen Vektor z ausgibt,

der Vektor z ein gewichteter arithmetischer Mittelwert der Eingabe $y_i$ der Anzahl $(n)$ von Eingaben $y_1, y_2, y_3, \ldots, y_n$ ist, und

eine Gewichtung für den gewichteten arithmetischen Mittelwert gemäß der Relevanz jeder Eingabe $y_i$ der Anzahl $n$ von Eingaben $y_1, y_2, y_3, \ldots, y_n$ bei gegebenem Kontext C bestimmt wird,

wobei:

jede Eingabe $y_i$ der Anzahl $n$ von Eingaben $y_1, y_2, y_3, \ldots, y_n$ durch eine jeweilige Gewichtung $s_i$ gewichtet wird,

$$s_i = softmax(m)_i,$$

$$m_i = tanh(y_i\, C),$$

softmax$(m)_i$ eine softmax-Funktion auf einem Vektor $m$, $m=(m_1, m_2, m_3, ..., m_n)$ ist, die für die i-te Komponente $m_i$ bewertet wird; und
tanh eine hyperbolische Tangentenaktivierungsfunktion ist, und

wobei:
die LSTM-RNN-Zelle (300) eine Vergessen-Tor-Schicht, eine Eingabetor-Schicht, eine Eingabetor-Modulierungsschicht und eine Ausgabetor-Schicht umfasst, und wobei die Parameter der LSTM-RNN-Zelle (300) unter Verwendung der folgenden Gleichungen bestimmt werden:

$$f_t = \sigma\big(W_f \cdot |h_{t-1}, x_t| + b_f\big)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

wobei:

$f_t$ die Vergessen-Tor-Schicht bei dem Zeitintervall $t$ ist,
$\sigma$ eine sigmoidale Aktivierungsfunktion ist,
$W_f$ eine Gewichtungsmatrix für die Vergessen-Tor-Schicht ist,
$h_{t-1}$ der verborgene Zustand des Zeitintervalls $t$-1 ist,
$x_t$ Eingabevariablen für das Zeitintervall $t$ sind,
$b_f$ eine Abweichung für die Vergessen-Tor-Schicht ist,
$i_t$ eine Eingabetor-Schicht bei dem Zeitintervall $t$ ist,
$W_i$ eine Gewichtungsmatrix für die Eingabetor-Schicht ist, $b_i$ eine Abweichung für die Eingabetor-Schicht ist,
$z_t$ eine Eingabetor-Modulierungsschicht bei dem Zeitintervall $t$ ist, tanh eine hyperbolische Tangentenaktivierungsfunktion ist,
$W_C$ eine Gewichtungsmatrix für die Eingabetor-Modulierungsschicht ist,
$b_c$ eine Abweichung für die Eingabetor-Modulierungsschicht ist,
$C_t$ ein Zellenzustand bei dem Zeitintervall $t$ ist,
$C_{t-1}$ ein Zellenzustand bei dem Zeitintervall $t$-1 ist,
$o_t$ eine Ausgabetor-Schicht bei dem Zeitintervall $t$ ist,
$W_o$ eine Gewichtungsmatrix für die Ausgabetor-Schicht ist,
$b_o$ eine Abweichung für die Ausgabetor-Schicht ist, und
$h_t$ ein verborgener Zustand bei dem Zeitintervall $t$ ist.

7. System (100) nach Anspruch 6, wobei die Anweisungen ferner bewirken, dass mindestens eine Verarbeitungseinheit (606):

einen Satz von Fehlerkennzahlen auf der Basis einer Mehrzahl von Sätzen von vorhergesagten Werten und einer Mehrzahl von Sätzen von entsprechenden Werten für einen Satz von Kennzahlen berechnet, welche die Nutzung des Satzes von Ressourcen durch den Ressourcenverbraucher (115) repräsentieren, der auf dem System (100) arbeitet;
bestimmt, ob ein Wert von einer der Fehlerkennzahlen in dem Satz von Fehlerkennzahlen größer ist als ein festgelegter Schwellenwert; und
nach dem Bestimmen, dass der Wert von einer der Fehlerkennzahlen in dem Satz von Fehlerkennzahlen größer ist als der festgelegte Schwellenwert, das Modell aktualisiert.

8. System (100) nach Anspruch 7, wobei das Aktualisieren des Modells umfasst:

Trainieren des Modells unter Verwendung eines Satzes von Werten für einen Satz von Kennzahlen, die bei jedem Zeitintervall in einem Satz von neuesten Zeitintervallen gemessen werden; und Speichern des aktualisierten Modells in einem Speicher.

9. System (100) nach einem von Anspruch 6 bis Anspruch 8, wobei die Anweisungen ferner bewirken, dass die mindestens eine Verarbeitungseinheit (606) die Zuordnung von Ressourcen in dem Satz von Ressourcen auf der Basis des Satzes von vorhergesagten Werten einstellt.

**Revendications**

1. Procédé, pouvant être exécuté par un dispositif informatique (110, 700), comprenant :

surveiller l'utilisation d'un ensemble de ressources par un consommateur de ressources (115) opérant sur le dispositif informatique (110, 700) ;
en fonction de l'utilisation surveillée de l'ensemble de ressources, générer un modèle comprenant une pluralité de couches de réseau neuronal récurrent à mémoire court et long terme, LSTM-RNN, (210, 220, 230) et un ensemble de couches de mécanisme d'attention (215, 225), le modèle étant configuré pour prédire l'utilisation future de l'ensemble de ressources, dans lequel le modèle inclut une couche d'entrée (205) configurée pour recevoir un ensemble de données de série temporelle associées à l'utilisation d'un ensemble de ressources par un consommateur de ressources (115), la couche d'entrée (205) étant suivie d'une couche LSTM-RNN (210) suivie d'une couche de mécanisme d'attention (215) suivie d'un zéro ou de davantage de paires d'une couche LSTM-RNN (220) et d'une couche de mécanisme d'attention (225) suivies d'une couche LSTM-RNN (230) et se terminant par une couche de sortie (235) configurée pour émettre l'ensemble de valeurs prédites ; et
en fonction de l'utilisation surveillée de l'ensemble de ressources et du modèle, déterminer un ensemble de valeurs prédites représentant l'utilisation de l'ensemble de ressources par le consommateur de ressources (115) opérant sur le dispositif informatique (110, 700),
dans lequel surveiller l'utilisation de l'ensemble de ressources par le consommateur de ressources (115) opérant sur le dispositif informatique (110, 700) comprend :

mesurer, à chaque intervalle de temps dans une pluralité d'intervalles de temps, l'utilisation de l'ensemble de ressources par le consommateur de ressources (115) opérant sur le dispositif informatique (110, 700) ; et
stocker l'utilisation mesurée à chaque intervalle de temps dans la pluralité d'intervalles de temps en termes d'un ensemble de valeurs pour un ensemble de mesures représentant l'utilisation de l'ensemble de ressources par le consommateur de ressources (115) opérant sur le dispositif informatique (110, 700) ; et
dans lequel générer le modèle comprend entraîner le modèle en utilisant l'ensemble de valeurs pour l'ensemble de mesures mesurées à chaque intervalle de temps dans un sous-ensemble de la pluralité d'intervalles de temps ; et
dans lequel le procédé comprend en outre exécuter un ensemble d'instructions pour ajuster, en fonction de l'ensemble de valeurs prédites, l'attribution de ressources dans l'ensemble de ressources, dans lequel :

chacune des couches LSTM-RNN (210, 220, 230) est mise en œuvre par une cellule LSTM-RNN (300), chaque cellule LSTM-RNN (300) recevant un état de cellule d'un intervalle de temps précédent $C_{t-1}$, un état caché d'un intervalle de temps précédent $h_{t-1}$ et des variables d'entrée pour l'intervalle de temps présent $x_i$ et émet un état de cellule de l'intervalle de temps présent $C_t$ et un état caché de l'intervalle de temps présent $h_t$,
chacune des couches de mécanisme d'attention (215, 225) est mise en œuvre par un mécanisme d'attention (400), le mécanisme d'attention (400) reçoit un nombre (n) d'entrées $y_1, y_2, y_3, ..., y_n$ et un contexte C,
un état caché émis $h_i$ d'une cellule LSTM-RNN (300) des cellules LSTM-RNN est une entrée $y_i$ du nombre n d'entrées $y_1, y_2, y_3, ..., y_n$ et un état de cellule émis $C_t$ de la cellule LSTM-RNN (300) est une entrée pour le contexte C,
le mécanisme d'attention (400) émet un vecteur z,
le vecteur z est un moyen arithmétique pondéré de l'entrée $y_i$ du nombre (n) d'entrées $y_1, y_2, y_3, ..., y_n$, et

un poids pour le moyen arithmétique pondéré est déterminé en fonction de la pertinence de chaque entrée $y_i$ du nombre $n$ d'entrées $y_1$, $y_2$, $y_3$, ..., $y_n$ étant donné le contexte C, dans lequel :

chaque entrée $y_i$ du nombre $n$ d'entrées $y_1$, $y_2$, $y_3$, ..., $y_n$ est pondérée par un poids respectif $s_i$,

$$s_i = softmax(m)_i,$$

$$m_i = tanh(y_i, \mathrm{C}),$$

$softmax(m)_i$ est une fonction $softmax$ sur un vecteur $m$, $m=(m_1, m_2, m_3, ..., m_n)$, évaluée pour le i$^e$ composant $m_i$ ; et
$tanh$ est une fonction d'activation de tangente hyperbolique, et
dans lequel :
la cellule LTSM-RNN (300) inclut une couche de porte d'oubli, une couche de porte d'entrée, une couche de modulation de porte d'entrée et une couche de porte de sortie, et dans lequel les paramètres de la cellule LTSM-RNN (300) sont déterminés en utilisant les équations suivantes :

$$f_t = \sigma(W_f |h_{t-1}, x_t| + b_f)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

où :

$f_t$ est la couche de porte d'oubli à l'intervalle de temps $t$,
$\sigma$ est une fonction d'activation sigmoïde,
$W_f$ est une matrice pondérale pour la couche de porte d'oubli,
$h_{t-1}$ est l'état caché de l'intervalle de temps $t-1$,
$x_t$ sont des variables d'entrée pour l'intervalle de temps t,
$b_f$ est un biais pour la couche de porte d'oubli,
$i_t$ est une couche de porte d'entrée à l'intervalle de temps $t$,
$W_i$ est une matrice pondérale pour la couche de porte d'entrée, $b_i$ est un biais pour la couche de porte d'entrée,
$z_t$ est une couche de modulation de porte d'entrée à l'intervalle de temps $t$, $tanh$ est une fonction d'activation de tangente hyperbolique,
$W_C$ est une matrice pondérale pour la couche de modulation de porte d'entrée,
$b_c$ est un biais pour la couche de modulation de porte d'entrée,
$C_t$ est un état de cellule à l'intervalle de temps $t$,
$C_{t-1}$ est un état de cellule à l'intervalle de temps $t-1$,
$o_t$ est une couche de porte de sortie à l'intervalle de temps $t$,
$W_o$ est une matrice pondérale pour la couche de porte de sortie,
$b_o$ est un biais pour la couche de porte de sortie, et
$ht$ est un état caché à l'intervalle de temps $t$.

2. Procédé selon la revendication 1, comprenant en outre :

calculer un ensemble de mesures d'erreur en fonction d'une pluralité d'ensembles de valeurs prédites et d'une pluralité d'ensembles de valeurs correspondantes pour un ensemble de mesures représentant l'utilisation de l'ensemble de ressources par le consommateur de ressources (115) opérant sur le dispositif informatique (110, 700) ;

déterminer si une valeur d'une des mesures d'erreur dans l'ensemble de mesures d'erreur est supérieure à une valeur seuil définie ; et

dès la détermination que la valeur d'une des mesures d'erreur dans l'ensemble de mesures d'erreur est supérieure à la valeur seuil définie, mettre à jour le modèle.

3. Procédé selon la revendication 2, dans lequel mettre à jour le modèle comprend :

entraîner le modèle en utilisant un ensemble de valeurs pour un ensemble de mesures mesurées à chaque intervalle de temps dans un ensemble d'intervalles de temps les plus récents ; et

stocker le modèle mis à jour dans un stockage.

4. Procédé selon l'une quelconque des revendications 1 à la revendication 3, dans lequel le procédé comprend en outre un ensemble d'instructions pour envoyer une notification à un dispositif client avertissant que l'utilisation d'une ressource dans l'ensemble de ressources est élevée.

5. Support non transitoire lisible par machine stockant un programme pouvant être exécuté par au moins une unité de traitement (606) d'un dispositif informatique (110, 700), le programme comprenant des ensembles d'instructions pour :

surveiller l'utilisation d'un ensemble de ressources par un consommateur de ressources (115) opérant sur le dispositif informatique (110, 700) ;

en fonction de l'utilisation surveillée de l'ensemble de ressources, générer un modèle comprenant une pluralité de couches de réseau neuronal récurrent à mémoire court et long terme (LSTM-RNN) (210, 220, 230) et un ensemble de couches de mécanisme d'attention (215, 225), le modèle étant configuré pour prédire l'utilisation future de l'ensemble de ressources, dans lequel le modèle inclut une couche d'entrée (205) configurée pour recevoir un ensemble de données de série temporelle associées à l'utilisation d'un ensemble de ressources par un consommateur de ressources (115), la couche d'entrée (205) étant suivie d'une couche LSTM-RNN (210) suivie d'une couche de mécanisme d'attention (215) suivie d'un zéro ou de davantage de paires d'une couche LSTM-RNN (220) et d'une couche de mécanisme d'attention (225) suivies d'une couche LSTM-RNN (230) et se terminant par une couche de sortie (235) configurée pour émettre l'ensemble de valeurs prédites ; et

en fonction de l'utilisation surveillée de l'ensemble de ressources et du modèle, déterminer un ensemble de valeurs prédites représentant l'utilisation de l'ensemble de ressources par le consommateur de ressources (115) opérant sur le dispositif informatique ; et

dans lequel surveiller l'utilisation de l'ensemble de ressources par le consommateur de ressources (115) opérant sur le dispositif informatique (110, 700) comprend :

mesurer, à chaque intervalle de temps dans une pluralité d'intervalles de temps, l'utilisation de l'ensemble de ressources par le consommateur de ressources (115) opérant sur le dispositif informatique (110, 700) ; et

stocker l'utilisation mesurée à chaque intervalle de temps dans la pluralité d'intervalles de temps en termes d'un ensemble de valeurs pour un ensemble de mesures représentant l'utilisation de l'ensemble de ressources par le consommateur de ressources (115) opérant sur le dispositif informatique (110, 700) ; et

dans lequel générer le modèle comprend entraîner le modèle en utilisant l'ensemble de valeurs pour l'ensemble de mesures mesurées à chaque intervalle de temps dans un sous-ensemble de la pluralité d'intervalles de temps ; et

ajuster l'attribution de ressources dans l'ensemble de ressources en fonction de l'ensemble de valeurs prédites,

dans lequel :

chacune des couches LSTM-RNN (210, 220, 230) est mise en œuvre par une cellule LSTM-RNN (300), chaque cellule LSTM-RNN (300) recevant un état de cellule d'un intervalle de temps précédent $C_{t-1}$, un état caché d'un intervalle de temps précédent $h_{t-1}$ et des variables d'entrée pour l'intervalle de temps présent $x_i$ et émet un état de cellule de l'intervalle de temps présent $C_t$ et un état caché de l'intervalle de temps présent $h_t$ ;

chacune des couches de mécanisme d'attention (215, 225) est mise en œuvre par un mécanisme d'attention (400),

le mécanisme d'attention (400) reçoit un nombre $n$ d'entrées $y_1, y_2, y_3, ..., Y_n$ et un contexte C,

un état caché émis $h_i$ de la cellule LSTM-RNN (300) des cellules LSTM-RNN est une entrée $y_i$ du nombre $n$ d'entrées $y_1, y_2, y_3, ..., y_n$ et un état de cellule émis $C_t$ de la cellule LSTM-RNN (300) est une entrée pour le contexte C,

le mécanisme d'attention (400) émet un vecteur z,

le vecteur z est un moyen arithmétique pondéré de l'entrée $y_i$ du nombre $n$ d'entrées $y_1, y_2, y_3, ..., y_n$, et un poids pour le moyen arithmétique pondéré est déterminé en fonction de la pertinence de chaque entrée $y_i$ du nombre $n$ d'entrées $y_1, y_2, y_3, ..., Y_n$ étant donné le contexte C,

dans lequel :

**chaque entrée** $y_i$ du nombre $n$ d'entrées $y_1, y_2, y_3, ..., y_n$ est pondérée par un poids respectif $s_i$,

$$s_i = softmax(m)_i,$$

$$m_i = tanh(y_i, \mathrm{C}),$$

$softmax(m)_i$ est une fonction $softmax$ sur un vecteur $m$, $m=(m_1, m_2, m_3, ..., m_n)$, évaluée pour le $i^e$ composant $m_i$ ; et

$tanh$ est une fonction d'activation de tangente hyperbolique, et

dans lequel :

la cellule LTSM-RNN (300) inclut une couche de porte d'oubli, une couche de porte d'entrée, une couche de modulation de porte d'entrée et une couche de porte de sortie, et dans lequel les paramètres de la cellule LTSM-RNN (300) sont déterminés en utilisant les équations suivantes :

$$f_t = \sigma(W_f|h_{t-1}, x_t| + b_f)$$

$$i_t = \sigma(W_i \cdot |h_{t-1}, x_t| + b_i)$$

$$z_t = tanh(W_C \cdot |h_{t-1}, x_t| + b_C)$$

$$C_t = (f_t \times C_{t-1}) + (i_t \times z_t)$$

$$o_t = \sigma(W_o \cdot |h_{t-1}, x_t| + b_o)$$

$$h_t = o_t \times tanh(C_t)$$

où :

$f_t$ est la couche de porte d'oubli à l'intervalle de temps $t$,

$\sigma$ est une fonction d'activation sigmoïde,

$W_f$ est une matrice pondérale pour la couche de porte d'oubli,

$h_{t-l}$ est l'état caché de l'intervalle de temps $t-l$,

$x_t$ sont des variables d'entrée pour l'intervalle de temps t,

$b_f$ est un biais pour la couche de porte d'oubli,

$i_t$ est une couche de porte d'entrée à l'intervalle de temps $t$,

$W_i$ est une matrice pondérale pour la couche de porte d'entrée, $b_i$ est un biais pour la couche de porte d'entrée,

$z_t$ est une couche de modulation de porte d'entrée à l'intervalle de temps $t$, $tanh$ est une fonction d'activation de tangente hyperbolique,

$Wc$ est une matrice pondérale pour la couche de modulation de porte d'entrée,

$b_c$ est un biais pour la couche de modulation de porte d'entrée,

$C_t$ est un état de cellule à l'intervalle de temps $t$,

$C_{t-1}$ est un état de cellule à l'intervalle de temps $t-1$,

$o_t$ est une couche de porte de sortie à l'intervalle de temps $t$,

$W_o$ est une matrice pondérale pour la couche de porte de sortie,

$b_o$ est un biais pour la couche de porte de sortie, et

$h_t$ est un état caché à l'intervalle de temps $t$.

6. Système (100) comprenant :

un ensemble d'unités de traitement (606) ; et
un support non transitoire lisible par machine stockant des instructions qui, lors de leur exécution par au moins une unité de traitement (606) dans l'**ensemble** d'unités de traitement (606), amènent l'au moins une unité de traitement (606) à :

surveiller l'utilisation d'un ensemble de ressources par un consommateur de ressources (115) opérant sur le système (100) ;
en fonction de l'utilisation surveillée de l'ensemble de ressources, générer un modèle comprenant une pluralité de couches de réseau neuronal récurrent à mémoire court et long terme (LSTM-RNN) (210, 220, 230) et un ensemble de couches de mécanisme d'attention (215, 225), le modèle étant configuré pour prédire l'utilisation future de l'ensemble de ressources, dans lequel le modèle inclut une couche d'entrée (205) configurée pour recevoir un ensemble de données de série temporelle associées à l'utilisation d'un ensemble de ressources par un consommateur de ressources (115), la couche d'entrée (205) étant suivie d'une couche LSTM-RNN (210) suivie d'une couche de mécanisme d'attention (215) suivie d'un zéro ou de davantage de paires d'une couche LSTM-RNN (220) et d'une couche de mécanisme d'attention (225) suivies d'une couche LSTM-RNN (230) et se terminant par une couche de sortie (235) configurée pour émettre l'ensemble de valeurs prédites ; et
en fonction de l'utilisation surveillée de l'ensemble de ressources et du modèle, déterminer un ensemble de valeurs prédites représentant l'utilisation de l'ensemble de ressources par le consommateur de ressources (115) opérant sur le système (100), et dans lequel surveiller l'utilisation de l'ensemble de ressources par le consommateur de ressources (115) opérant sur le système (100) comprend :

mesurer, à chaque intervalle de temps dans une pluralité d'intervalles de temps, l'utilisation de l'ensemble de ressources par le consommateur de ressources (115) opérant sur le système (100) ; et
stocker l'utilisation mesurée à chaque intervalle de temps dans la pluralité d'intervalles de temps en termes d'un ensemble de valeurs pour un ensemble de mesures représentant l'utilisation de l'ensemble de ressources par le consommateur de ressources (115) opérant sur le système (100) ; et
dans lequel générer le modèle comprend entraîner le modèle en utilisant l'ensemble de valeurs pour l'ensemble de mesures mesurées à chaque intervalle de temps dans un sous-ensemble de la pluralité d'intervalles de temps ; et
ajuster l'attribution de ressources dans l'ensemble de ressources en fonction de l'ensemble de valeurs prédites,
dans lequel :

chacune des couches LSTM-RNN (210, 220, 230) est configurée pour être mise en œuvre par une cellule LSTM-RNN (300), chaque cellule LSTM-RNN (300) recevant un état de cellule d'un intervalle de temps précédent $C_{t-1}$, un état caché d'un intervalle de temps précédent $h_{t-1}$ et des variables d'entrée pour l'intervalle de temps présent $x_i$ et émet un état de cellule de l'intervalle de temps présent $C_t$ et un état caché de l'intervalle de temps présent $h_t$,
chacune des couches de mécanisme d'attention (215, 225) est configurée pour être mise en œuvre par un mécanisme d'attention (400),
le mécanisme d'attention (400) est configuré pour recevoir un nombre n d'entrées $y_1, y_2, y_3, ..., y_n$ et un contexte C,
un état caché émis $h_i$ d'une cellule LSTM-RNN (300) des cellules LSTM-RNN est une entrée $y_i$ du nombre $n$ d'entrées $y_1, y_2, y_3, ..., y_n$ et un état de cellule émis $C_t$ de la cellule LSTM-RNN (300) est une entrée pour le contexte C,
le mécanisme d'attention (400) émet un vecteur z,
le vecteur z est un moyen arithmétique pondéré du nombre $n$ d'entrées $y_1, y_2, y_3, ..., y_n$, et
un poids pour le moyen arithmétique pondéré est déterminé en fonction de la pertinence de chaque entrée $y_i$ du nombre $n$ d'entrées $y_1, y_2, y_3, ..., y_n$ étant donné le contexte C,

dans lequel :

chaque entrée $y_i$ du nombre $n$ d'entrées $y_1, y_2, y_3, ..., y_n$ est pondérée par un poids respectif $s_i$,

$$s_i = softmax(m)_i,$$

$$m_i = tanh(y_i, \mathrm{C}),$$

$softmax(m)_i$ est une fonction $softmax$ sur un vecteur $m$, $m=(m_1, m_2, m_3, ..., m_n)$, évaluée pour le $i^e$ composant $m_i$ ; et
$tanh$ est une fonction d'activation de tangente hyperbolique, et
dans lequel :
la cellule LTSM-RNN (300) inclut une couche de porte d'oubli, une couche de porte d'entrée, une couche de modulation de porte d'entrée et une couche de porte de sortie, et dans lequel les paramètres de la cellule LTSM-RNN (300) sont déterminés en utilisant les équations suivantes :

$$f_t = \sigma(W_f | h_{t-1}, x_t| + b_f)$$

$$i_t = \sigma(W_i \cdot | h_{t-1}, x_t| + b_i)$$

$$z_t = tanh(W_C \cdot | h_{t-1}, x_t| + b_C)$$

$$C_t = (f_t \times C_{t-1}) + (i_t \times z_t)$$

$$o_t = \sigma(W_o \cdot | h_{t-1}, x_t| + b_o)$$

$$h_t = o_t \times tanh(C_t)$$

où :

$f_t$ est la couche de porte d'oubli à l'intervalle de temps $t$,
$\sigma$ est une fonction d'activation sigmoïde,
$W_f$ est une matrice pondérale pour la couche de porte d'oubli,
$h_{t-1}$ est l'état caché de l'intervalle de temps $t-1$,
$x_t$ sont des variables d'entrée pour l'intervalle de temps t,
$b_f$ est un biais pour la couche de porte d'oubli,
$i_t$ est une couche de porte d'entrée à l'intervalle de temps $t$,
$W_i$ est une matrice pondérale pour la couche de porte d'entrée, $b_i$ est un biais pour la couche de porte d'entrée,
$z_t$ est une couche de modulation de porte d'entrée à l'intervalle de temps $t$, $tanh$ est une fonction d'activation de tangente hyperbolique,
$Wc$ est une matrice pondérale pour la couche de modulation de porte d'entrée,
$b_c$ est un biais pour la couche de modulation de porte d'entrée,
$C_t$ est un état de cellule à l'intervalle de temps $t$,
$C_{t-1}$ est un état de cellule à l'intervalle de temps $t-1$,
$o_t$ est une couche de porte de sortie à l'intervalle de temps $t$,
$W_o$ est une matrice pondérale pour la couche de porte de sortie,
$b_o$ est un biais pour la couche de porte de sortie, et
$h_t$ est un état caché à l'intervalle de temps $t$.

7. Système (100) selon la revendication 6, dans lequel les instructions amènent en outre l'au moins une unité de traitement (606) à :

calculer un ensemble de mesures d'erreur en fonction d'une pluralité d'ensembles de valeurs prédites et d'une pluralité d'ensembles de valeurs correspondantes pour un ensemble de mesures représentant l'utilisation de l'ensemble de ressources par le consommateur de ressources (115) opérant sur le système (100) ;

déterminer si une valeur d'une des mesures d'erreur dans l'ensemble de mesures d'erreur est supérieure à une valeur seuil définie ; et

dès la détermination que la valeur d'une des mesures d'erreur dans l'ensemble de mesures d'erreur est supérieure à la valeur seuil définie, mettre à jour le modèle.

8.  Système (100) selon la revendication 7, dans lequel mettre à jour le modèle comprend :

entraîner le modèle en utilisant un ensemble de valeurs pour un ensemble de mesures mesurées à chaque intervalle de temps dans un ensemble d'intervalles de temps les plus récents ; et

stocker le modèle mis à jour dans un stockage.

9.  Système (100) selon l'une quelconque des revendications 6 à la revendication 8, lequel les instructions amènent en outre l'au moins une unité de traitement (606) à ajuster, en fonction de l'ensemble de valeurs prédites, l'attribution de ressources dans l'ensemble de ressources.

100

**FIG. 1**

200

205

Input Layer

210

LSTM-RNN layer

215

Attention Mechanism Layer

220

LSTM-RNN layer

225

Attention Mechanism Layer

230

LSTM-RNN layer

235

Output Layer

## FIG. 2

FIG. 3

**FIG. 4**

500

Monitoring utilization of a set of resources by a resource consumer operating on a computing system ⟋ 510

↓

Based on the monitored utilization of the set of resources, generating a model comprising a plurality of long short-term memory recurrent neural network (LSTM-RNN) layers and a set of attention mechanism layers, the model configured to predict values for the set of metrics associated with utilization of the set of resources ⟋ 520

↓

Based on the monitored utilization of the set of resources and the model, determining a set of predicted values for the set of metrics associated with utilization of the set of resources by the resource consumer operating on the computing system ⟋ 530

# FIG. 5

600

**Processing Subsystem**

Processor <u>604-1</u>

Processing
Unit
<u>606</u>

Processor <u>604-2</u>

Processing
Unit
<u>606</u>

Processing
Unit
<u>706</u>

Processing
Unit
<u>606</u>

Processing
Unit
<u>606</u>

• • •

<u>602</u>

I/O Subsystem
<u>608</u>

626

**Storage Subsystem**

System Memory

Application Programs
<u>614</u>

Program Data
<u>616</u>

Operating System
<u>618</u>

<u>612</u>

<u>610</u>

Computer
Readable
Storage Medium
<u>620</u>

Computer
Readable
Storage Medium
Reader
<u>622</u>

Communication Subsystem
<u>624</u>

**FIG. 6**

700

| Input/Output System | | | 708 |
|---|---|---|---|
| Display 710 | Sensor(s) 712 | Speaker 714 | Mic 716 |

| Operating System 722 |
|---|
| Application(s) 724 |
| I/O Module 726 |
| Communication Module 728 |

| Processing System 702 | |
|---|---|
| Processor(s) 704 | Memory 706 |

| Storage System 720 |
|---|

| Communication System 718 |
|---|

**FIG. 7**

800

Client
802

Client
804

Client
806

Client
808

Network(s)
810

Cloud Computing System    812

Application(s)
814

Service(s)
816

Database(s)
818

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108874542 A, UNIV GUILIN ELECTRONIC TECH

**Non-patent literature cited in the description**

- **FAZLE K et al.** LSTM Fully Convolutional Networks for Time Series Classification. *IEEE Access*, 14 February 2018